# EUROPEAN PATENT SPECIFICATION

(11) **EP 1 504 584 B1**
(45) Date of publication and mention of the grant of the patent: **17.01.2007**
(21) Application number: 03747440.0
(22) Date of filing: 30.04.2003
(51) Int. Cl.: H04L 29/06, H04M 3/56, H04L 12/18

(54) **COMMUNICATIONS ENVIRONMENT HAVING MULTIPLE WEB SITES**
KOMMUNIKATIONSUMGEBUNG MIT MEHREREN WEB-SITES
ENVIRONNEMENT DE COMMUNICATIONS ASSOCIANT PLUSIEURS SITES WEB

(30) Priority: 30.04.2002 EP 02009799; 22.07.2002 US 201226
(43) Date of publication of application: 09.02.2005
(73) Proprietor: Combots Product GmbH & Co.KG, 76227 Karlsruhe (DE)
(72) Inventor: COTTE, Pierre-Alain, 92224 Amberg (DE)
(74) Representative: DTS München
(86) International application number: PCT/EP2003/004535
(87) International publication number: WO 2003/094470

(56) References cited:
- WO-A-00/57621
- WO-A-00/69140
- WO-A-01/15423
- WO-A-01/77859
- WO-A-01/84859
- US-B1- 6 282 281
- HYONG SOP SHIM ET AL: "An example of using presence and availability in an enterprise for spontaneous, multiparty, multimedia communications" INTERNET TELEPHONY WORKSHOP 2001, 3 April 2001 (2001-04-03), XP002252324 Retrieved from the Internet: <URL:http://www.iptel.org/2001/pg/final_pr ogram/> [retrieved on 2003-08-25]
- COMMWEB: "Avaya UC Platform Ties Mobile Workers to the Office" INTERNET CITATION, 15 March 2002 (2002-03-15), XP002210056 Retrieved from the Internet: <URL:http://www.commweb.com/article/COM200 20315S0005> [retrieved on 2002-08-16]
- DON PETERSON: " Goldman Sachs Communications Technology Retreat" GOLDMAN SACHS ANNUAL CONFERENCE, 4 March 2002 (2002-03-04), XP002210057 Santa Barbara, California
- BROCKBANK R ET AL: "CLICK DIAL WEB-ENABLED CTI" BRITISH TELECOMMUNICATIONS ENGINEERING, LONDON, GB, vol. 18, no. 1, April 1999 (1999-04), pages 18-24, XP000829903 ISSN: 0262-401X
- SCHULZRINNE ROSENBERG: "<draft-ietf-sip-callerprefs-05.txt> - SIP Caller Preferences and Callee Capabilities" INTERNET DRAFT , [Online] 21 November 2001 (2001-11-21), XP002256772 Retrieved from the Internet: <URL:ftp://ftp.fh-schmalkalden.de/pub/docu ments/internet-drafts/draft-ietf-sip-calle rprefs-05.txt> [retrieved on 2003-10-07]

## Description

### BACKGROUND

In general, the present invention relates to communications environments for an end user unit communicating via the communications environment and related systems, devices, units and methods for communications purposes.In particular, the present invention relates to a communications environment capable of integrating various communications systems, such as computer-based networks, the Internet, Public Switched Telephone Network (PSTN) networks, Univeral Mobile Telecommunications System (UMTS) networks, mobile telephone networks, radio communications systems, satellite-based communications and the like wherein all communications from and to a end user unit are executed via a general-purpose communications interface, referred to herein as a telecommunications web site, in a private manner with respect to the communicating parties.

Traditionally, in order to accomplish personalized and private communications, postal service-based communications, e.g., by letters, personally addressed to a receiving party uniquely characterized by a name and address are used.A further example, of private communications personally directed to a party are telephone network-based communications, e.g., telephone calls, facsimiles and telexes, wherein a telephone number uniquely indicate the addressee.

In view of a demand for enhanced communications, computer network-based communications, e.g., via the Internet, have partially replaced the traditional communications. Although, computer network-based communications exhibit some benefits compared to postal service-based and telephone network-based communications, e.g., a higher transmission rates for text and graphic data, transmissions of different data formats via a common communications link and transmissions of high data amounts and loads, some of the advantages of "writing letters" and "calling a person per telephone" have been abandoned for the sake of participating in new technology communications.

In the following, an overview of different conventional communications environments is given respectively indicating advantages and disadvantages thereof:

Conventional telephone systems (PSTN, mobile telephone networks, satellite and radio-based environments) used for voice provide for point-to-point communications links allowing virtually true and simultaneous bi-directional communications and (nearly) delay-free data transmissions. Beside the actions of communicating parties to input telephone numbers, to pick up telephone hand sets, to speak and to listen and the like. Data transmissions between respective end user units (telephones) are not possible.

Further, the addressing of a party is based on worldwide valid addresses, i.e., telephone numbers, which uniquely identify a party.Thus, upon dialing the right telephone number, a communications link will be established to a desired party and, as a result, communications will occur only between the calling and the called party, i.e., communications will be personalized and private.However, the established communication will not necessarily be secure.

End user units for telephone communications environments, in particular for mobile communications environments, are small, light weight and not restricted to a special location, such that communications are possible wherever intended.

Thus, telephone-based communications are an easy and fast way to communicate.On the other hand telephone-based communications have limited data transmission capabilities, e.g., limited transmissions bandwidths.Therefore, for example, transmissions of video and audio data are possible in restricted extent only and multimedia communications links are not possible at all.

A further limitation of telephone environments is their restricted capability of event-based control of communications.In telephone environments, for example, it is possible to forward an incoming call to another telephone device in general but not selectively for specific calling parties only.

Computer-based communications environments (e.g., local area networks and the Internet) employ a plurality of hardware devices (e.g., computer systems and network modems) and, in particular, a vast number of different software applications (e.g., network browsers, e-mail applications, data conversion software and encoding and decoding software).A certain level of knowledge, understanding and experience is required by users of such communications environments specifically with respect to the use of software applications.For example, computer-based communications environments are based on complex addressing methods, which require, compared to telephone-based communications, an increased amount of user interaction and knowledge.

Further, computer-based communications environments do not provide for true bi-directional communications, i.e., communications performed simultaneously and virtually in real time. Rather, such communications are subsequently performed uni-directional data transmissions like data file exchanges, web page accesses and e-mail-based communications.

Moreover, due to the methods employed with computer-based communications environments for actually transmitting data (e.g., asynchronous file transfer of data packets, least cost network routing strategies and utilization of different physical communications links for one communications connection), voice and video data transmissions are restricted. Further drawbacks of computer-based communications environments include security problems (e.g., data interception) and undesired data communications (e.g., "junk mail").

In computer-based communications environments, communications that can be compared with telephone-based communications in respect to personalization and privacy are based on e-mail applications. On the other hand, e-mail communication is, from its nature, more akin to enhanced letter writing rather than bi-directional communication, such as directly talking via telephones.

Additionally, computer-based communications environments have restricted capabilities to control communications on the basis of events. Using e-mail applications, for example, it is only possible to forward received e-mail messages to another party (e.g., by means of another e-mail address) or to filter undesired e-mail messages such that they are not actually received by the party to which they are addressed (e.g., junk mail filter).

A further example of computer-based communications are web sites and its web page(s), respectively. Web sites generally provide for uni-directional communications, in particular transmissions of data and information to end user units and its users, respectively, accessing a web site. Moreover, private communications comparable to telephone communications are not possible since web sites are accessible by anybody or by a predefined group of users.

Both, telephone and computer-based communications environments are isolated from each other. Thus, separate addresses and addressing methods are employed for telephone and computer-based communications environments. As a result, communications can only be established within one environment and cannot be interconnected to another one.

### SUMMARY OF THE INVENTION

The present invention provides a communications environment including a first web site corresponding to a first specific entity and a second web site corresponding to a second specific entity. The second web site is configured for providing, upon an accessing by the first web site, private communications between the first specific entity and the second specific entity.

The second web site may be configured for providing, upon the accessing by the first web site, a data exchange with the first web site. The first and second web sites may be connected to each other and, moreover, may communicate using the same protocol.

The present invention also provides a web site for providing communications. The web site includes a web page corresponding to a first specific entity and a processing device. The processing device is configured for providing, upon an accessing by a second web site, private communications between the first specific entity and a second specific entity corresponding to the second web site.

A communications device is also provided by the present invention. The communications device includes a user interface device and a network interface device. The user interface device is configured for at least one of a user input and a user output. The network interface device is configured for performing network-based private communications with a first specific entity associated with a first web site, the network-based private communications being performed in response to an accessing of the first web site by a second web site corresponding to a second specific entity associated with the communications device.

The present invention also provides a method for providing communications. The method includes: providing a first web site corresponding to a first specific entity, the first web site being configured for performing private communications; providing a second web site corresponding to a second specific entity, the second web site being configured for performing private communications; accessing the first web site by the second web site; and providing, in respond to the accessing, private communications between the first specific entity and the second specific entity.

Also provided by the present invention is a computer readable medium having stored thereon computer executable process steps operative to perform a method for providing communications. The method includes: providing a first web site corresponding to a first specific entity, the first web site being configured for performing private communications; providing a second web site corresponding to a second specific entity, the second web site being configured for performing private communications; accessing the first web site by the second web site; and providing, in respond to the accessing, private communications between the first specific entity and the second specific entity.

The present invention may be employed to overcomes disadvantages existing in known communications environments while realizing advantages, such as privacy, ease of use, and/or data communications capabilities, offered by available communications environments.

### BRIEF DESCRIPTION OF THE DRAWINGS

In the following description, the present invention is elaborated upon based on exemplary embodiments, with reference to the drawings.

Fig. 1 shows a schematic diagram depicting private communications between a first end user unit and a specific entity via the telecommunications web site according to the present invention.

Figs. 2a to 2d show schematic diagrams of four schemes according to which participants of the communication can be connected via a telecommunication web site.

Fig. 3 shows a schematic diagram of an embodiment of the communications environment according to the present invention.

Fig. 4 shows a schematic diagram of another embodiment of the communications environment according to the present invention.

Fig. 5a and 5b show schematic diagrams illustrating two different ways in which participants of a communication can be connected via a telecommunication web site.

Fig. 6 shows a schematic diagram illustrating the way in which a participant A can communicate with a participant B using two different end user units that are controlled by the same telecommunications web site at the same time.

Fig. 7a and 7b show schematic diagrams illustrating ways in which participants can communicate via one telecommunications web site and two telecommunications web sites, respectively.

Fig. 8 shows a schematic diagram of an embodiment of the communications environment according to the present invention featuring a telecommunications portal.

Fig. 9 shows another embodiment of the present invention in which two telecommunication web sites are provided on one telecommunications portal.

Fig. 10 shows an embodiment of the communications environment according to the present invention including two telecommunications web site telecommunications portals.

Fig. 11 shows another embodiment of the present invention with two telecommunication portals allowing communication between two participants.

Fig. 12 shows a schematic diagram of the architecture of an embodiment of the communication environment according to the present invention.

### DETAILED DECRIPTION

In an embodiment, the present invention provides a communications environment comprising a first end user unit (used by a calling party) being adapted to perform network-based communications, and a web site including at least one web page, wherein the web site is a telecommunications web site (TCW) corresponding to a specific entity, and the telecommunications web site is adapted to provide, upon an access by the first end user unit, for private communications between the calling party using the first end user unit and the specific entity (preferably using the TCW). Thus a new way of communications is disclosed where a specific entity or person can be contacted via a web site providing private communications between a caller (calling party) and the host of this telecommunications web site. In Internet communication of the prior art, the parties do not communicate via a personalized web site; rather, web sites are used to simply administrate communication options. Even using a web site within a chat forum, this web site of the chat forum does not correspond to a specific person; rather there can be many different persons in the chat forum.

A communications environment may be a communications system comprising more than one component, i.e., more than one device and/or type of device, media and/or type of media, network and/or type of network. Thus, a communications environment or communications system might for instance comprise a telephone, a PSTN-network, a gateway to the internet, etc.

The first end user unit, as any end user unit, is preferably a device which can be used for communications. The end user unit may be a telephone, a keyboard, a computer terminal, a mobile phone, a fax, a telex, a mail pigeon, an ordinary letter, a scanner, a PSTN device, a 3G-wireless communications device, especially a UMTS device, etc. Moreover, the end user unit may be another telecommunications web site, a telecommunications portal comprising more than one telecommunications web sites or a device using a browser-based application.

The end user unit may include a user interface device and a network interface device. The user interface device provides for user input and/or output. The user interface device may be a telephone, a keyboard, a computer terminal, and/or a mobile communications device, for example. The network interface device may be a V.42, V.90, V.92 modem, a personal computer memory card international association (PCMCIA) modem, a digital subscriber line (DSL) modem, an integrated service digital network (ISDN) adapter, a cable modem, a wireless modem, an ethernet card, or an integrated modem of a mobile phone, for example. The end user unit is not limited to a particular communications unit/ device or any communications network. Rather, the end user unit may enable communications via any communications network such as regular telephone networks, mobile communications networks, computer networks, radio transmission networks, the Internet, etc. Further, the first end user unit is not restricted to single devices, but can also include two and more units, devices, and the like providing data/information sending and/or receiving capabilities for communications purposes, e.g., an ordinary letter and a scanner.

The end user unit is adapted to perform network-based communications. Thus, the end user unit is connectable to a network and able to communicate with a network. Thus, data information can be processed in a network. A network in this context may be a physical transport medium in which data and/or signal can be fed. For example, an ordinary letter itself is adapted to perform network-based communication when scanned or digitized and supplied into a transmission control protocol/internet protocol (TCP/IP) network.

The terms "web site" and "web page" define sites and sub-sites associated thereto which can be uniquely addressed by means of a single address, like a telephone number or an IP address, a uniform resource locator (URL), etc. It is also advantageous to use such a "web site" in a 3G-communication environment, especially an UMTS-environment. Preferably, such a web site is a site known from the Internet with a specific URL, which can be accessed by Internet visitors, and by the web site host. The web site host may be the owner of the web site.

A web site can include one or more web pages. These web pages are part of the one web site. It should be noted that the terms "web site" and "web page" are not to be considered to limit the present invention to conventional web sites and WebPages known from the Internet. Thus, the web site and its web page(s), respectively, can be accessed by establishing a communications link from the first end user unit independently of the network(s) employed.

A telecommunications web site may be a web site adapted to provide, upon an access event, for private communications between two entities, as further discussed below. Preferably, the telecommunications web site corresponds to a first specific entity and is adapted to provide, upon an access by the first end user unit, for private communications between the first end user unit and the first specific entity. The terms "telecommunications web site" and "web site" may be understood to encompass software and hardware components effecting the site. Such components may include one or more processors, for example.

A telecommunications web site is assigned to or personalized for or corresponding to a specific person or entity. Such a first specific entity can be a person, a company or any other entity. The specific entity preferably acts as the host of the telecommunication web site. The specific entity may be a single entity, e.g., a specific user or owner (e.g., a single person, a company, a unit of a company, etc.) of the telecommunications web site, a specific address, a specific location, a specific end user unit and the like.

Preferably, the communication established between the first end user unit and the specific entity is a private communication. A private communication is a communication in which a third party can not overhear the parties to the communication. The communication is not controlled by a third party or monitored by a person like a System Operator in a chat-forum. The communication takes place between the host of the telecommunications web site, i.e., the specific entity, and the visitor of the telecommunication web site, i.e., the person using the first end user unit. The private communication is a non-public communication.

The telecommunications web site of the present invention designates a site which is adapted and provided to be used for communication, preferably personal communication, private communication such as a telephone conversation, e-mail exchange, fax-communication, file-exchange, etc. The telecommunications web site may be adapted to be used for telecommunication, i.e., real time communication between two or more users using electronic media like a telephone or the Internet.

Thus, the communication may include only the user of the first end user unit and the person behind the specific entity. It is within the discretion of the person behind the specific entity to allow third parties to take part in this communication. The user of the first end user unit may be the "caller" and the person behind the specific entity may be the "called party" of such a private communication. It is also possible that the person behind the specific entity establishes the communication to the person behind the first end user unit. Such a communication will be established only between the first end user unit and the specific entity.

The telecommunications web site can, for instance, be accessed and controlled by the specific entity via a browser-based application. The browser may be a web browser, such as Netscape Navigator^{™} or Microsoft Internet Explorer^{™}, for example. The specific entity may then receive all communication on this telecommunications web site. For example, in order to provide for private communications with a desired person, the respective telecommunications web site of this person is accessed by means of the first end user unit, e.g., under control of a controlling user or system. In response to the telecommunications web site access, the telecommunications web site enables direct and private communications with the specific entity, here the desired person. In other words, communications by means of the telecommunications web site are personalized with respect to the "called" specific entity.

Preferably, the communication takes place on this specific and personalized telecommunications web site, i.e., this specific URL identifying the specific entity, i.e., the called party as host of the telecommunications web site. The telecommunications web site might then be used interactively, i.e., the communication may take place between the caller and the called party as in a telephone conversation. Both, the caller and the called party then use the same address for the interaction, for example the same URL. It might even be the case, that both the calling party and the called party use telephones as end user units - then the telecommunications web site works as a virtual operator connecting both the calling party and the called party.

As is discussed below, the telecommunications web site serves as a general purpose communications interface for end user units and addressed entities which can include or can be an end user unit itself. As an illustration, the telecommunications web site can be considered as a communications "window", similar to a window of an office counter, where communicating parties are "sitting" on opposite sides of the window and can communicate through speech holes in the window, via an intercom, by gestures, by facial expressions, showing papers with information written thereon, passing documents through a hatch and so on. Comparable thereto, the telecommunications web site according to the present invention allows communications in a plurality of modes and by a plurality of types/formats of data/information.

Using the telecommunications web site communication may be provided over combinations of different types of communication links or paths. These different links may be part of different networks, such as PSTN, IP-based networks or UMTS networks, for example. The different links may be accessed by using different end user units.

In an embodiment, no spam-mail can be sent to a telecommunications web site. Spam-mail is sent to e-mail adresses. The access of the telecommunications web site via spam-mail programs is not possible where the address of the telecommunications web site is not an e-mail address.

In an embodiment of the present invention the telecommunications web site is adapted to provide for bi-directional private communications between the first end user unit and the specific entity. Thus, the established communication is intercommunicative and advantageous for persons who wish to communicate real time, i.e., where action, reaction and interaction are perceived as being instantaneous by a human being.

According to an embodiment, the communications environment comprises a second end user unit being associated with the specific entity and being adapted to perform network-based communications, wherein the telecommunications web site is adapted to provide for the private communications as private communications between the first end user unit and the second end user unit. Thus, the specific entity may use any end user unit end user unit desired to communicate with the other party, i.e., with the person behind the first end user unit. Thus, the specific entity is not limited to a device used to access the telecommunications web site (for instance via a browser-based application) but may rather use any known communication device. The second end user unit is not limited to a particular communications unit/device or any communications network. Here, the telecommunications web site is adapted to provide for the private communications as private communications between the first end unit and the second end user unit. The utilization of the second end user unit depends on the actually properties of the specific entity. In the case the specific entity is adapted to provide for communications comparable to an end user unit, the private communications can occur without any further end user unit. On the other hand, employing the second end user unit makes it possible to perform the private communications between the first end user unit and any type of end user unit serving as or being comprised by the second end user unit. For example, if the specific entity is a single person, private communications can take place between any communications device of this person, e.g., a personal (portable) computer, a mobile telephone, a fax machine, a telephone, UMTS devices, memory devices, etc., and the first end user unit.

Communications via the telecommunications web site are not limited to a specific type of end user unit and specific entity. In particular, telecommunications web site-based communications can originate from and can be designated to any communications unit, such as telephones, personal computers, portable computer systems, fax devices and the like. Moreover, users of telecommunications web sites do not have to perform specific interactions in dependence of used end user units. Rather, the end user units are used in a common manner. For example, in the case of the first end user unit being a telephone, address information (like a telephone number) is inputted by the calling user and a communications link is established to the called destination (here the specific entity or an associated end user unit and a user thereof, respectively). Then, interacting with the respective end user units can perform communications. In particular, called and calling users can use their end user units independently of the type of end user unit of the counterpart end user unit. As result, for example, a calling user can utilize a telephone, while the called user communicates by means of a personal computer.

The present also provides a telecommunications web site, comprising at least one web page, wherein the web site is a telecommunications web site corresponding to a specific entity, and the telecommunications web site is adapted to provide, upon an access by a first end user unit, for private communications between the first end unit and the specific entity.

In an embodiment, the present invention also provides a method including the steps of: providing a web site including at least one web page corresponding to a specific entity and being adapted to provide private communications, accessing the telecommunications web site by a first end user unit, and providing, in response to the accessing the telecommunications web site by the first end user unit, private communications between the first end user unit and the specific entity.

The private communications may be provided as bi-directional private communications between the first end user unit and the specific entity by the telecommunications web site.

Preferably, the communications link is a multiprotocol chain, i.e., a chain of multiple communications links of different types. The inidividual links may carry various types of communications media (voice, data, video, etc.). Thus, it is possible to combine several communications links into one communications link. For instance, a PSTN-end user unit 1 may be connected via the PSTN-network via a gateway to the Internet. Via the TCP/IP protocol it may reach a first telecommunications web site on a first telecommunications portal. Then, a link from first telecommunications portal to a second telecommunications portal is provided via an optical fiber followed by an Asynchronous Transfer Mode-Wireless Local Loop (ATM-WLL) connection. On second telecommunications portal, the connection is realized via the TCP/IP protocol and to a second UMTS-based end user unit via a second gateway on the second telecommunications portal. Thus, several types of links are used to establish one communications link between the two end user units. Preferably, the communication is established according to the most effective path. Most effective preferably means the path with the highest quality of service. It may also mean the path with the lowest cost or billing structure, or a combination of these criteria.

Preferably, the mutliprotocol chain not only provides for one path or channel but for several channels in parallel. Thus, a_chain may include several parallel chains, or paths, connecting one end user unit to another end user unit or even several end user units. These parallel chains may be identical or different to each other. Thus, it is possible to connect a person using a telephone and a fax machine in parallelto another person using one telecommunications web site on a computer and a UMTS device. The basic arrangement has two parallel paths or channels. These paths may be identical or based on different types of communications links. Each path may include only one type of communications link.

In an embodiment, the present invention provides a communications environment, comprising: a first end user unit being adapted to perform network-based communications, and a web site including at least one web page, wherein the web site is a telecommunications web site corresponding to a specific entity, and the telecommunications web site is adapted to provide, upon an access by the first end user unit, for private communications between the first end user unit and the specific entity, including a connection means for establishing a communications link from the first end user unit to the specific entity of the telecommunications web site. With this combination of a telecommunications web site with a connection means, it is possible to connect different end user units from different technical environments to each other. One PSTN-end user unit may connect to an IP-end user unit by virtue of the connection means. This connection is provided and/ or established by virtue of the telecommunications web site. Preferably, this connection is established via the telecommunications web site.

The connection means may be controlled by the telecommunications web site. By controlling the connection means by the telecommunications web site, the telecommunications web site can work as a "virtual operator". The telecommunications web site can now connect two or more end user units by controlling the connection means that are used to establish this specific connection between these end user units. This connection is established and/ or provided by the telecommunications web site, not necessarily via the telecommunications web site. Of course, one of the end user units can be the telecommunications web site of the specific entity or the computer controlling the telecommunications web site, respectively.

The connection means may be a converter, an adapter, an IP-switch, an ATM-switch, a mechanical or electro-mechanical switching board, a protocol translator, a gateway, especially a telephone network gateway, a UMTS/ G3 network gateway, a computer network gateway, a television network gateway, a cable network gateway and/ or an Internet gateway or a combination of these components. With these components, the telecommunications web site may establish a connection between the specific end user units building up chains of components to establish this connection. Preferably, these chains of components also comprise transport means like cable, wire, networks, radio communications, etc.

A first gateway may be provided for establishing a communications link from the first end user unit to the telecommunications web site in response to a request by the first end user unit to access the telecommunications web site. Thus, the use of any end user unit for communicating by means of the communication environment is enabled. Thus, the use any of a variety of types of end user units for communicating using the communication environment is enabled. As an example, the first gateway can provide for a link between a PSTN network and a computer network or the Internet. Thus, a telephone as a first end user unit can communicate with a personal computer connected to the Internet as a second end user unit.

A second gateway may be provided configured for establishing a communications link from the telecommunications web site to the specific entity in response to the direct private communications provided by the telecommunications web site. Thus, various additional end user units can be connected to each other via the telecommunication web site telecommunications web site.

As a result, in a comparable manner, a restriction to any special type of specific entity usable with the telecommunications web site can be resolved. As an example, the second gateway can provide for a link between the telecommunications web site to a PSTN network, a computer network or the Internet servicing the specific entity.

With respect to both the first and second gateways, a communications link is not limited to a single physical data transmission link or line, but can include different transmission paths, utilized in series and/or in parallel. Thus, communications links can comprise communications links within different networks. Further, communications links can be established to different communications sources and/or destinations at the same time, e.g., in the case the first end user unit and/or the specific entity include different devices or means for sending and receiving communications data/information.

To enhance the performance of the communications environment according to the present invention and to obtain, at least partially, independence from other communications environments, the communications environment can comprise a network including at least one of a telephone network, a computer network and/ or the Internet for performing at least one of the network-based communications and the private communications.

In this sense an optimization can be achieved by at least one of the first gateway and second gateway being at least one of a telephone network gateway, a computer network gateway and an Internet gateway.

In an embodiment, the present invention provides a first telecommunications web site corresponding to a first specific entity, wherein the first telecommunications web site is adapted to provide, upon an access by a second telecommunications web site corresponding to a second specific entity, for private communications between the first specific entity and the second specific entity.

The first and/or the second telecommunications web sites may be adapted to provide, upon an access by the other telecommunication web site, for data exchange between the first and the second telecommunications web site.

The present invention also provides a method for providing communications, including the steps of: providing a first telecommunications web site including at least one first web page corresponding to a first specific entity and being adapted to provide private communications; providing a second telecommunications web site including at least one second web page corresponding to a second specific entity and being adapted to provide private communications; accessing the first telecommunications web site by the second telecommunications web site; and providing, in response to the accessing the first telecommunications web site by the second telecommunications web site, private communications between the first specific entity and the second specific entity.

The method may include the step of providing, in response to the accessing, for data exchange between the first and the second telecommunications web site.

With a combination of a telecommunications web site and a connection means, especially a gateway, it is for instance possible for the specific entity as host of the telecommunications web site to establish a communication between the internet-based telecommunications web site and a PSTN-network. Thus, it is not only possible to establish a communication over two telephones via the Internet but via a PSTN-network. The specific entity as host of the telecommunications web site can, for example, choose a connection between a first telephone as a first end user unit and another telephone as a second end user unit. The access to establish this communications link will then be initiated from the telecommunications web site via a controlling device to a PSTN-network between these two telephones. As an example, both telephones begin to ring - the connection is established in the PSTN-network between these two telephones on access through the telecommunications web site - but not via the telecommunications web site.

In an embodiment, the present invention provides a multiprotocol communications environment, comprising: a telecommunications web site corresponding to a specific entity, a first connection means adapted to connect a first end user unit and a first end user unit of the specific entity, a second connection means adapted to connect a second end user unit and a second end user unit of the specific entity wherein both the first connection means and the second connection means are controlled by the telecommunications web site. With this arrangement, it is possible to have a multiprotocol connection between two or more parties over different types of communication links, herein refered to as multiprotocol connection. This arrangement may be adapted to use the best connection for each link or type of link. The "best connection" may be the connection with the best quality of service or the lowest costs or a combination thereof.

A multiprotocol connection may include different types of communications links, such as links of PSTN-networks, UMTS-networks, TCP/IP based networks, etc. For example, the connection of a telephone in a PSTN-network to a UMTS device in an UMTS-includes is a multiprotocol connection. Such a connection in parallel with a connection of a computer in a TCP/IP based network to another computer in a TCP/IP based network is also a multiprotocol connection as herein defined. Thus, the parallel use of different types of communications links is a multiprotocol connection. The inidividual links may carry various types of communications media (voice, data, video, etc.).

Preferably, the first connection means is an IP-switch and/ or the second connection means is a PSTN-switch. Thus, it is possible to connect two parties each using a telephone in a PSTN-network and a computer with a camera to exchange real time video data at the same time. Since the telecommunications web site is in control of both connection means, it is possible to handle this multiprotocol connection by the simple control of the telecommunications web site, i.e., a simple mouse click in a browser based application. Establishing such a multiprotocol connection is achieved by choosing the party to be called in the telecommunications web site and choosing the kind of connection(s) to be established. All different multiprotocol connections are then established by the telecommunications web site that controls the respective connection means to establish such a connection. In addition, the telecommunications web site controls the multiprotocol connection by controlling the respective connection means. If the connection is to be terminated, the telecommunications web site manages the shut down of all types of connection involved.

Preferably, the first end user unit and/ or the first end user unit of the specific entity comprises at least one video device, especially a video camera and/ or a video monitor. Especially wherein the second end user unit and/ or the second end user unit of the specific entity comprises at least one PSTN device, especially a stationary telephone and/ or a mobile telephone. With such an arrangement, it is possible to establish a video conference. Preferably, such a video conference is a combination of a PSTN-connection for the voice and a TCP/IP connection for the pictures to be transmitted. With such an arrangement, the voice will be transmitted with no delay and the pictures may have a certain delay in the transmission which on the other hand is acceptable for communication.

In an embodiment, the present invention provides a telecommunications web site corresponding to a specific entity comprising a first connection means adapted to connect a first end user unit and a first end user unit of the specific entity, a second connection means adapted to connect a second end user unit and a second end user unit of the specific entity wherein both the first connection means and the second connection means are controlled by the telecommunications web site. With such a telecommunications web site, a multiprotocol connection can be established and provided.

In an embodiment, the present invention provides a method of connecting two parties in a multiprotocol communications environment comprising the steps of: connecting to a telecommunications web site, choosing the kind of multiprotocol connection to be established, establishing each part of the chosen multiprotocol connection via a connection means controlled by the telecommunications web site. With this method, a multiprotocol connection or link can be established that allows for using different end user units in parallel in one connection to another party.

The present invention provides a communications environment, comprising a first web site including at least one web page, wherein the first web site is a first telecommunications web site corresponding to a first specific entity, and a second web site including at least one web page, wherein the second web site is a second telecommunications web site corresponding to a second specific entity, and the first and/ or the second telecommunications web sites are/is adapted to provide, upon an access by the other telecommunication web site, for private communications between the first specific entity and the second specific entity. With two telecommunications web sites, both, calling entity and called entity can benefit from the communication options and opportunities of a telecommunications web site.

In an embodiment, the first and/ or the second telecommunications web site are/is adapted to provide, upon an access by the other telecommunication web site, for data exchange between the first and the second telecommunications web site. Thus, it is possible to exchange data between both telecommunications web sites without the specific entities having to actively communicate about the content of this data. The data exchange can take place simultaneously or even before the private communication between the specific entities is established.

Preferably, the data exchange comprises data including at least one of:
- personal data of the specific entity;
- communication preferences of the specific entity;
- background information of the specific entity; and
- a combination of any of the aforementioned data.
Thus, it is possible that specific data is exchanged that may have changed and needs to be updated. This can take place without the first specific entity having to actively inform the second specific entity about this new information and vice versa. Preferably, both telecommunications web sites exchange data. It is also possible that only one of the communicating telecommunications web sites provides data and the other telecommunications web site is adapted to download this data.

Such data to be exchanged may be personal data of the specific entity such as contact information (telephone number, fax number, e-mail, address, etc.), data of a more personal kind like birthday, matrimonial status (married, bachelor, etc.), nationality, home address, photos, movies, videos, articles, text, religious confession, professional information, etc.

Further, communication preferences of the specific entity may be exchanged. Such preferences may include the way how the person wants to be contacted (via telephone, via video-conference, via e-mail, etc.) or the time when this person wants to be contacted or the time zone in which the specific entity lives or works (western time, European time, etc.), meta information on communication, languages, data exchange formats, passwords, cookies, requirement of ssl-connection, virus scanner information, etc.

Further, background information of the specific entities may be exchanged like hobbies, personal interests, a résumé of the specific entity, a homepage, etc.

The kind of data to be exchanged may be predefined by the specific entity. Thus, the specific entity define not only the content of the data to be exchanged but also define what kind of data is to be exchanged. With that feature, the telecommunications web site can be prepared to share exactly the information and exchange that kind of data the specific entity predefined to share.

The data may be exchanged automatically. Thus, (new) data can be provided to the calling party, e.g., first specific entity, from the called party second specific entity without having to communicate actively about the new data. In a further embodiment, the data is exchanged on request of one party, e.g., the calling party, can select a button provided on the second telecommunications web site in order to download the data from the second specific entity.

In embodiment of the communication environment there are provided more than two telecommunications web sites. Thus, it is possible to communicate with more than one specific entity via the personal telecommunications web site of different entities. With such a standardized group of specific entities all using a personalized telecommunications web site, it is extremely easy to communicate and share information or exchange data to be distributed for the first time or updated. It is possible to inform people of a new address after having moved without the need to call and inform each person. The specific entity with the new address will inform any other specific entity with a telecommunications web site automatically the next time when communicating via the data exchange between the first and second telecommunications web site without "mentioning" the new address actively.

In an embodiment of the communication environment, all telecommunications web sites answer to the same basic protocol of data exchange. Thus, it is possible to exchange a minimum piece of information on each specific entity of a telecommunications web site via the data exchange between the telecommunications web sites. With such a standardized basic information protocol it is possible to exchange necessary data between all specific entities using a telecommunications web site. Such data preferably includes available communication channels, a security password, recognition data (cookies), virus scanner updates, and software updates.

In an embodiment, the present invention provides a first telecommunications web site corresponding to a first specific entity, wherein the first telecommunications web site is adapted to provide, upon an access by a second telecommunications web site corresponding to a second specific entity, for private communications between the first specific entity and the second specific entity. With such a telecommunications web site, full advantage can be taken of the communication via a telecommunications web site.

Preferably, the first and/ or the second telecommunications web sites are/is adapted to provide, upon an access by the other telecommunication web site, for data exchange between the first and the second telecommunications web site.

As a result, it is advantageous to use two telecommunications web sites communicating with each other. Thus, through automation, an enhanced, faster, more secure and more pleasant way of communication is possible.

In an embodiment, the present invention provides a communications environment wherein at least one telecommunications web site is provided on a portal. Such a portal may be herein referred to as a telecommunications portal. For providing the telecommunications web site, it is preferred to use a telecommunications portal or a cluster of sub-telecommunications portals serving as a telecommunications portal. Each member of the telecommunications portal may use the infrastructure of the telecommunications portal. This enhances the nature of the telecommunications web site to serve as a general purpose communications interface or communications "window".

A telecommunications portal preferably has several resources which are accessible by all members of this telecommunications portal. Thus, all members can share these resources. The members of a telecommunications portal do not have to have their own resources but can benefit from the resources provided by the telecommunications portal. Such resources can be services or content data. Preferably, the services comprise navigation help such as search tools or directories, communication tools such as chat forum or e-mail or mobile phone services or a calendar tool or newsgroup servers/ directories or encrypting services like certifications for secure communications or wake-up services. Further, the telecommunications portal might comprise entertainment services such as games in the field of the stock exchange market, services of a betting office, comics, greeting cards or radio stations to listen to. Further, the telecommunications portal might provide services on traffic information, download areas for software, providing webspace, services on registering domains, etc. Preferably, the telecommunications portal provides content data such as for instance news on financial issues, sport events, political news, television program, weather information or horoscopes. Further it might provide information systems for route planning, consumer services like ordering newsletters, online-shopping, modules for comparing services such as telephone fees, car rental fees or insurances. Further, the telecommunications portal might provide certain services with respect to the communication of the telecommunication web sites, e.g., a server shared by all telecommunications web sites that provides the history information of the connections of the telecommunications web site.

Preferably, the telecommunications portal comprises a connection means, or device, accessible by the at least one telecommunications web site. Such connection means are also resources of the telecommunications portal that can be used by the web sites of the telecommunications portal. These connection means may be means with which the telecommunications portal can connect to another network as described above. The connection means may include converters, adapters, IP-switches, ATM-switches, protocol translators, gateways, especially UMTS network gateways, or a combination thereof. With such resources, the telecommunications portal is a more advanced communication platform since on the telecommunications portal resources are provided which the single user of a telecommunication web site may not be able afford to acquire.

To enhance the nature of the telecommunications web site to serve as a general communication interface, a telecommunications portal having a plurality of telecommunications web sites may be used. Here, the telecommunications portal represents an accumulation of telecommunications web sites on the specific telecommunications portal. The telecommunication portal preferably has an integrated consistent addressing scheme, comprising each unique telecommunications web site residing on this telecommunications portal and thus enabling the definite assignment of different telecommunications web sites of a specific telecommunication portal by the structure of the telecommunications web site address. Preferably, such an integrated consistent addressing scheme is based on the same top and/ or second level domain. Thus, a user of a telecommunications portal WEB.DE having the name "NAME1" may have an address according to an addressing scheme "NAME1.WEB.DE", while another user having the name "NAME2" may have the address "NAME2.WEB.DE". The name may be an alphanumerical figure, preferably a telephone number. Especially preferred is a telephone number with an alphanumerical prefix, designating the country of the user and/ or the telecommunications portal. In another embodiment, such an addressing scheme is the use of a common feature in all the addresses of the users of one telecommunications portal. Such a common feature may be a prefix, a suffix, a certain format of a telephone number used as an address, etc. Thus, it can be recognized from the address, whether a user belongs to a certain telecommunications portal or not.

The telecommunications web sites residing on one telecommunications portal may be connected to each other. In contrast to telecommunication web sites not belonging to a specific telecommunications portal and thus communicating with each other by means of public accessible communication networks like the internet, PSTN-networks, etc., the telecommunications portal i.e., the telecommunications web sites on a telecommunications portal, provides a particular, "physical" connection, e.g., a fiber optics or copper cable interconnection, that allows a stable, high speed and high-performing data transmission capability between different telecommunications web sites belonging to the same telecommunications portal and thus enhancing the communication possibilities. The telecommunications web sites provided, or residing, on a telecommunications portal may share or partially share hardware and/or software components. Preferably, the telecommunications web sites of one telecommunications portal are located on a same server or server set and use the same database.

In an embodiment, the present invention provides a telecommunications portal comprising at least two telecommunications web sites, wherein the telecommunications web sites on the telecommunications portal have an integrated consistent addressing scheme.

In an embodiment, the present invention provides a method for providing communications, including the steps of:
providing a first telecommunications web site including at least one first web page corresponding to a first specific entity and being adapted to provide private communications;
providing a second telecommunications web site including at least one second web page corresponding to a second specific entity and being adapted to provide private communications;
accessing the first telecommunications web site by the second telecommunications web site; and
providing, in response to the accessing the telecommunications web site by the second telecommunications web site, private communications between the first specific entity and the second specific entity;
wherein both telecommunications web sites reside on one telecommunications portal.

In an embodiment, the present invention provides a communications environment, comprising: a first web site including at least one web page, wherein the first web site is a first telecommunications web site corresponding to a first specific entity, and a second web site including at least one web page, wherein the second web site is a second telecommunications web site corresponding to a second specific entity, and the first and/or the second telecommunications web sites are/is adapted to provide, upon an access by the other telecommunications web site, for private communications between the first specific entity and the second specific entity wherein both the first and the second telecommunications web site are provided on a telecommunications portal. With two telecommunications web sites provided on a telecommunications portal, enhanced communication methods can be used. Thus, communication between two telecommunications web sites on a telecommunications portal is accomplished faster and more securely.

In an embodiment, the first and/ or the second telecommunications web sites are/is adapted to provide, upon an access by the other telecommunications web site, for data exchange between the first and the second telecommunications web site. With such a data exchange, the communication between both telecommunications web sites can be improved. This data exchange can be accomplished faster since both telecommunications web sites are on the same telecommunications portal.

The data exchange between the two telecommunications web sites may be accomplished as in the case of two telecommunications web sites not belonging to the same telecommunications portal - but much faster and according to certain protocols that are valid on the telecommunications portal. Another advantage of telecommunications portals is the uniformed/standardized type of information and data which can be provided through a telecommunications web site and the way the information is processed, e.g., personal information of the specific entity corresponding to the telecommunications web site or presence information.

Moreover the telecommunications web site provides for a certain degree of trust applying to the data that is provided by a telecommunications web site on the one hand and the specific entity corresponding to a specific telecommunications web site on the other hand. This again enhances the communication possibilities and in particular the speed of data transmission between telecommunications web sites of the same telecommunications portal by the automation of certain authorization processes.

Thus, the arrangement of telecommunications web sites on a telecommunications portal enables an enhanced communication between specific entities corresponding to specific telecommunications web sites belonging to the same telecommunications portal by allowing for instance first specific entity to access second specific entity using, e.g., a stationary telephone first end user unit and nevertheless allowing the called second specific entity to find out automatically, that first specific entity is on his part assigned to a telecommunications web site of the same telecommunications portal. Thus, it is possible to establish a communication link not only to first end user unit but also to a multitude of single devices or means. Moreover, the telecommunications web site of second specific entity is able to establish automatically such enhanced communication to different end user units without requiring further action of one of the communicating entities since this information is present on the same telecommunications portal. Thus, first telecommunications web site knows automatically all possible end user units assigned to second entity and may use these for providing/ establishing a communication between first specific entity and second specific entity.

Furthermore it is possible to access a certain telecommunications portal in order to retrieve data about the different telecommunications web sites residing on that telecommunications portal in total, for instance about the structure of specific entities (natural persons or companies, etc.) corresponding to the telecommunications web sites on this telecommunications portal.

In contrast to the communication scenarios provided by two communicating telecommunications web sites independently organized (i.e., without residing on or belonging to a specific telecommunications portal), through automation an enhanced, faster, more secure and more pleasant way of communication is possible.

Since the telecommunications web site are residing on or provided by a telecommunications portal, communication will be arranged "between" the communicating parties, here the first specific entity of a first telecommunications web site and the second specific entity of the second telecommunications web site, in a physical sense. Since both telecommunications web sites are physically provided on the same telecommunications portal, communication and especially data exchange can be accomplished much faster. In addition, the communication protocol may be standardized within one specific telecommunications portal. Thus, the connected telecommunications web sites can communicate directly since both telecommunications web sites "know" what data is to be exchanged within this specific telecommunications portal without having to crosscheck. This provides a faster and more secure connection between both telecommunications web sites of a specific telecommunications portal.

Preferably, the telecommunications portal is also adapted to establish communications links for performing the private communications. For example the telecommunications portal can, upon an access by the first telecommunications web site to the second telecommunications web site, establish a communications link there from to the first telecommunications web site. This communications link may be different compared to the communications link used for the access. As an option or in addition thereto, the telecommunications portal may establish a communications link from the telecommunications web site to the specific entity or to an associated end user unit.

In an embodiment, the present invention provides a communications environment wherein at least two telecommunications portals, each comprising at least one telecommunications web site, are provided. With two telecommunications portals, communication can be established between a first telecommunications web site residing on the first telecommunications portal and a second telecommunications web site residing on the second telecommunications portal. With the use of two telecommunications portals, the telecommunications web sites residing on different telecommunication portals may benefit from the infrastructure of both the telecommunications portals when connecting.

In an embodiment, the telecommunications portals are adapted to establish at least one connection, or communications link, for performing communications, especially private communications. Thus, the communication may be established between an end user unit 1 of a first telecommunications web site 1 on the first telecommunications portal that is supplied by a first gateway or connection means not available on the second telecommunications portal. Nevertheless, a communications link can be established since both the first telecommunications portal and the second telecommunications portal are connectable to each other. The communications link may be a multiprotocol chain, and thus have different types of communications links.

Preferably, the two telecommunications portals communicate according to a common protocol. With the use of a common protocol, the communications link can be established not only in a basic way but in a more enhanced way. This allows for more speed and security in the communication between both first telecommunications portal and second telecommunications portal. Such a protocol may define specific ways of exchanging data and even specify certain information on the telecommunications web sites of the different telecommunications portals to be shared between both the first and second telecommunications portals.

Preferably, the communications link is a synchronous communication link. With such a synchronous communications link such as an ATM-link, the communication between the telecommunications portals can be realized in a real-time mode. This means that the communication is not adversely affected by delays in the transmission of the data. Preferably, the data packages are sent and received without delay that would cause an irritation with a human being, i.e., not causing a delay of more than 500 ms, preferably not more than 250 ms. A link with such little delay is accepted as "synchronous". Preferably, the communication is not randomly packet orientated like in a TCP/IP connection. With TCP/IP, the data package is routed from the sender to the receiver according to a routing strategy. As a result, a package sent at a time t1 may be received by the receiver after having received a second package sent after the first package at time t2. The receiver then brings all packages back into order. Thus, the packages are received "asynchronous" rather than package after package, i.e., "synchronous". If the packages are sent and received fast enough and brought back into order without causing a delay of more than 500 ms, such a link was still a synchronous link.

Possible ATM-links may be realized using ATM passive optical networks (APON), direct optical fiber connections or copper wires with for instance Asymetric Digital Subscriber Line/High bit-rate Digital Subscriber Line technology, ATM-radio links (ATM-Wireless Local Loop, ATM-WLL), etc. Preferably, the connection link is established via a dedicated line.

The present invention also provides a first telecommunication portal comprising at least a first telecommunications - -web sites, wherein the first telecommunications portal is adapted to provide for establishing at least one communications link to a second telecommunications portal.

In an embodiment of the present invention, the communications link is established according to a protocol predefined by the first telecommunications portal. Preferably, the first telecommunications portal provides for more than one protocol. Such a protocol may define the way in which communication is established between the two telecommunications portals. A telecommunications portal can have more than one protocol, preferably one protocol is chosen for establishing communication between two telecommunications portals. With such protocols, the communication between two telecommunications web sites belonging to different telecommunications portals can be enhanced. Such a protocol may define the way of automatic data exchange between the telecommunications portals. Such data may comprise the infrastructure of the telecommunications portal, e.g., the kind and number of resources of the telecommunications portal, information on which resources may be used by "visitors", conditions that have to be satisfied to allow the usage of these resources, security information, information on the capacity of the telecommunications portal and/ or the resources, number of telecommunications web sites in the telecommunications portal, languages spoken, lists of protocols, information on the time zone in which the telecommunications portal is operated, etc.

Preferably, the protocol provides a definition of the kind of data to be exchanged between a first telecommunications web site of the first telecommunications portal and a second telecommunication web site of the second telecommunications portal.

The communication link may be established between the first telecommunications web site of the first telecommunications portal and a second telecommunications web sites of the second telecommunications portal.

In an embodiment, the present invention provides a method for providing communications, including the steps of:
providing a first telecommunications portal including a first telecommunications web site including at least one first web page corresponding to a first specific entity and being adapted to provide private communications;
providing a second telecommunications portal including a second telecommunications web site including at least one second web page corresponding to a second specific entity and being adapted to provide private communications;
accessing the first telecommunications web site by the second telecommunications web site; and
providing, in response to the accessing the first telecommunications web site by the second telecommunications web site, private communications between the first specific entity and the second specific entity via a communications link between the first telecommunications portal and the second telecommunications portal.

Preferably, the communications link is a physical link and/ or a dedicated ATM link and/ or a virtual private network.

The method may include the step of selecting a joint protocol for the communications link between the first telecommunications portal and the second telecommunications portal.

The interrelation of two telecommunication portals is preferably defined by their connection. Corresponding to the above described connection between different telecommunications web sites residing on the same Telecommunication Portal again it is preferred to build up either a "physical" link between two telecommunications portals or a dedicated ATM link or a virtual private network. Other possible connections and links between two telecommunications portals are described above.

This in turn enhances the data transmission capability between first telecommunications web site belonging to the first telecommunications portal and telecommunications web site belonging to the second telecommunications portal in the same way it is enhanced within the same telecommunications portal.

In an embodiment of the present invention, the identical protocol of two web sites on the same telecommunications portal is applied for the communication between two telecommunications portals. Thus, the above mentioned uniformed/standardized type of information and data which can be provided through a telecommunications web site is processed between two telecommunications portals.

In another embodiment of the the present invention, the protocol used between two telecommunications portals differs from the one used for two telecommunications web sites residing on the same telecommunications portal. For instance, a telecommunications portal dedicated to a certain company retrieves different data of the specific entities corresponding to the single telecommunications web sites residing on this telecommunications portal (e.g., rank, department, scope of duties) than a telecommunications portal dedicated to a commercial telecommunications web site-provider would.

Preferably, these standards differ from one telecommunications portal to another, which leads to a further characterization of the correlation of two different telecommunications portals: Different telecommunications portals can agree on terms of enabling the conversion of certain data and information on basis of, e.g., a certain joint protocol. The areas of such conversion could be more or less restrictive, depending on the degree of trust between these telecommunications portals.

An advantage of a communication of two telecommunications web sites belonging to different telecommunications portals is the range of possibilities for building up a communication link between them. In the case of no existing "physical" or virtual private link between the two telecommunications portals a communication of the two telecommunications web sites is possible via public accessible communication networks such as the Internet or the PSTN-networks. Moreover, although the data transmission capabilities in this case may be well below those provided by a private link they are still clearly higher than even the capabilities of two telecommunications portal-independent telecommunications web sites because of the above described opportunities of joint protocol-based automatic data adjustment.

In an embodiment, the present invention provides a computer program product, including program code portions for carrying out the steps according to one of the methods according to the invention. The computer program product may be stored on a computer readable storage medium or in a computer readable memory unit.

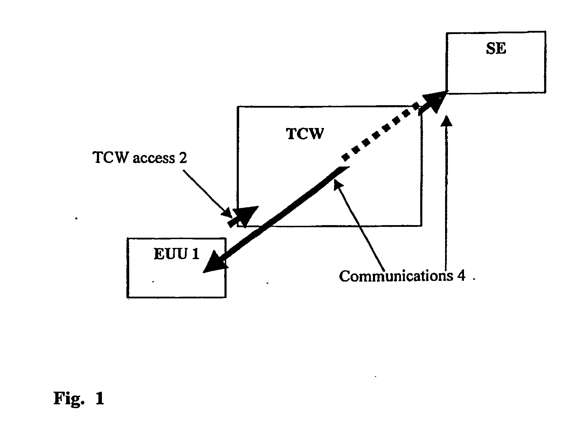

As shown in Fig. 1, first end user unit EUU1 accesses telecommunications web site TCW, as indicated by arrow telecommunications web site TCW access 2. In response to telecommunications web site TCW access 2, telecommunications web site TCW establishes private communications 4 with a specific entity SE. Private communications 4 are performed only between first end user unit EUU1 and specific entity SE; further parties cannot participate. As set forth above, telecommunications web site TCW serves as a general-purpose communications interface or "window" as illustrated in Fig. 1.

First end user unit EUU1 may be a single communications unit, such as a stationary/mobile telephone, fax device, computer system and the like. Further, in order to increase the communications capabilities, first end user unit EUU1 may include more than one communications unit which can be individually used or used in parallel for accessing telecommunications web site TCW and communicating via telecommunications web site TCW.

As opposing communications party, specific entity SE may be characterized as the entity with which telecommunications web site TCW is associated, i.e., telecommunications web site TCW is personalized for specific entity SE. For addressing specific entity SE and communicating therewith, telecommunications web site TCW is accessed by first end user unit EUU1 using an address-like identification uniquely indicating telecommunications web site TCW and, thus, specific entity SE. For example, a user of first end user unit EUU1 enters address information characterizing specific entity SE, e.g., a company or a person, to be contacted. On the basis of the provided address information, telecommunications web site TCW is accessed and establishes in response thereto the private communications with specific entity SE, e.g., the company or person with whom communications are intended by the caller.

For communications purposes, the specific entity SE can include a single communications unit, like a stationary/mobile telephone, fax device, computer system and the like. Further, in order to increase the communications capabilities, the specific entity SE can be comprised of more than one communications unit which can be individually used or used in parallel for communicating via the telecommunications web site TCW.

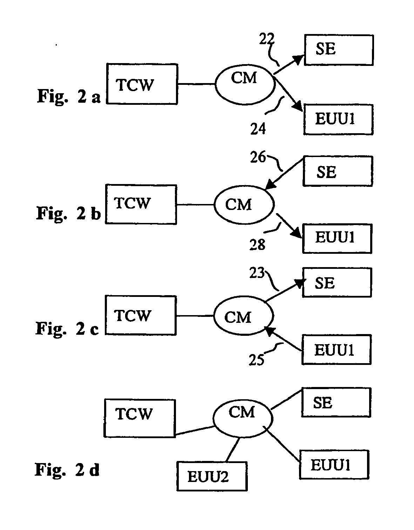

In Figs. 2a to 2d, a first scheme of communication between specific entity SE and first end user unit EW1 is illustrated. Telecommunications web site TCW has connection means CM available to it. Telecommunications web site TCW is connected to, and controls, connection means CM. In some embodiments, connection means CM may be integral with telecommunications web site TCW. Connection means CM may be an IP switch, an adapter, a gateway, etc. Connection means CM is adapted to provide and establish communication between specific entity SE and first end user unit EUU1.

With reference to Fig. 2a, telecommunications web site TCW may initiate, via connection means CM, a connection (arrow 22) to specific entity SE and at the same time a connection (arrow 23) to first end user unit EUU1. Both participants, specific entity SE and first end user unit EUU1, are then connected via telecommunications web site TCW, which controls connection means CM. For example, specific entity SE may access telecommunications web site TCW and request to establish communication between specific entity SE and first end user unit EUU1. Specific entity SE may use a telephone and first end user unit EUU1 may use a mobile telephone, for example. Telecommunications web site TCW now controls connection means CM to initiate a call to the stationary telephone of specific entity SE and to initiate a second call to the mobile telephone used as first end user unit EW1. Further, the connection means CM connects both the call to specific entity SE and the call to first end user unit EUU1. The respective telephones of specific entity SE and first end user unit EUU1 begin to ring. The specific end user having initiated this call via the telecommunications web site TCW may now pick up his/her phone and be connected to first end user unit EUU1.

In Fig. 2b, specific entity SE is shown directly accessing (arrow 26) the telecommunications web site TCW via the connection means CM. The telecommunications web site TCW now establishes a connection (arrow 28) via connection means CM to first end user unit EUU1. Thus, specific entity SE as the calling party can connect to first end user unit EUU1 via the telecommunications web site TCW and connection means CM.

In Fig. 2c, first end user unit EUU1 is shown initiating the connection by calling (arrow 25) telecommunications web site TCW. The telecommunications web site TCW then initiates a call (arrow 23) to specific entity SE via connection means CM. Thus, first end user unit EUU1 is connected to specific entity SE via the connection means CM, which is controlled by the telecommunications web site TCW. With this embodiment according to the present invention it is possible for first end user unit EUU1 to directly connect to specific entity SE via the telecommunications web site TCW without knowing, or being concernec with, what sort of end user unit specific entity SE is using.

Fig. 2d illustrates communication between more than two participants. Specific entity SE may now initiate calls and connections via the telecommunications web site TCW to invite another end user using end user unit EUU2 into the call. Thus, functions like conference call, switching, forwarding, rejecting, parking, etc., may be effected. It may be the case that specific entity SE and first end user unit EUU1 are already in communications, when EUU2 calls specific entity SE via the telecommunications web site TCW. Specific entity SE may then choose to park first end user unit EUU1 and to talk to EUU2 while first end user unit EUU1 is on hold. Specific entity SE may then decide to invite first end user unit EUU1 into a conference with specific entity SE and EUU2. Thus, a communication between three participants may be estalished.

Telecommunications web site TCW may therefore work as a "virtual operator" using connection means CM and establishing a communication path between several participants of the communication. Specific entity SE, as the owner of the telecommunications web site TCW, may then decide which party to invite into the communication and which party to reject. Since connection means CM may include not only switches, such as IP switches or switches in the PSTN network, but also gateways and protocol translaters, telecommunications web site TCW may be used as a virtual operator to establish a variety of types of communication connections.

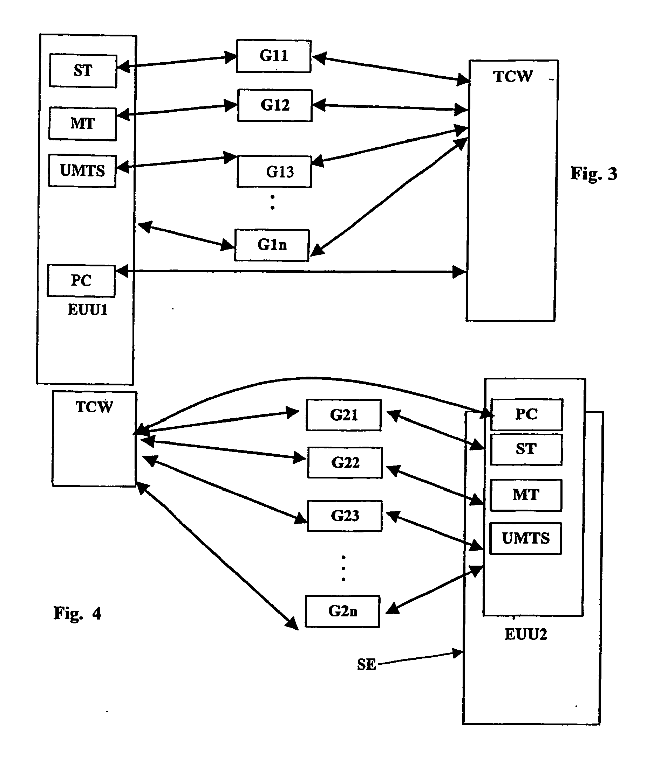

Reference may now be had to Fig. 3. For accessing and communicating via telecommunications web site TCW, first end user unit EUU1 may use a direct communications link, e.g., over the Internet in the case where both first end user unit EUU1 and telecommunications web site TCW are serviced by the Internet. Where first end user unit EUU1 is a communications unit adapted for and/or serviced by a network different from a network telecommunications web site TCW is connected to (here the Internet), respective gateways G11,..., Gln, as shown in Fig. 3, may be used.

In particular, gateway G11 is employed for accesses to, and communications with, telecommunications web site TCW where first end user unit EUU1 includes stationary telephone ST serviced by a PSTN network. Gateway G12 is employed where first end user unit EUU1 includes mobile telephone MT serviced by a mobile communications network. The number of gateways G11,... , G1n is not necessarily limited and may primarily depend on the type of first end user unit EUU1 and communications devices used.

In a comparable manner, as shown in Fig. 4, for communicating via telecommunications web site TCW with respect to specific entity SE, a direct communications link can be used. The direct communications link may be, e.g., over the Internet where both specific entity SE and telecommunications web site TCW are serviced by the Internet. Where specific entity SE is a communications unit adapted for and/or serviced by a network different from a network the telecommunications web site TCW is connected to (here the Internet), respective gateways G21,..., G2n, as shown in Fig. 4, may be used.

Gateway G21 is employed for accesses to, and communications with, telecommunications web site TCW where specific entity SE includes second end user unit EW2 having a stationary telephone serviced by a PSTN network. Gateway G22 is employed where second end user unit EUU2 includes a mobile telephone serviced by a mobile communications network. Again, the number of gateways G21,... , G2n is not necessarily limited and may primarily depend on the type of specific entity SE used and the communications devices used.

For example, where both the calling party (first end user unit EUU1) and the called party (specific entity SE) communicate using a personal computer, they communicate via the telecommunications web site TCW of specific entity SE using a visual display on their personal computers which has the appearance of a conventional web page. In contrast to a conventional web page, however, telecommunications web site TCW is accessed by both parties at the same time: information inputted on one side will be displayed on the other side as it is being inputted. For example, in the case of text inputted by one party, the other party will be provided, on its display, the text as it is inputted by the transmitting party. Thus, in contrast to a conventional e-mail system, neither the sending party nor the receiving party is required to perform actions to transmit or receive, respectively, communications data.

Where both first end user unit EUU1 and specific entity SE communicate by telephone, communications will also be executed via telecommunications web site TCW. In view of the restricted information display capabilities of a telephone, i.e., in general only the transmission of voice data optional with low resolution graphic data, such communications will appear as a conventional telephone conversation optionally accompanied by visual information on one or both telephone displays - with the notable difference that communications are executed via telecommunications web site TCW.

Advantages of communications via telecommunications web site TCW are more evident for the case of communications between first end user unit EUU1 utilizing a telephone and specific entity SE communicating using a personal computer. For example, assume a calling user associated with first end user unit EUU1 intends to communication with a user associated with specific entity SE, here from a telephone to a personal computer. The calling user accesses telecommunications web site TCW of the user to be contacted by providing the respective address information via the telephone. In response thereto, telecommunications web site TCW connects to the personal computer of the called user and, thus, establishes a communications link between the two users. For actually communicating, both users utilize respective end user units, i.e., the telephone and the personal computer, in a conventional manner, while telecommunications web site TCW interfaces between the different types of end user units.

As a result, the telephone user will, in general, communicate with voice transmissions, while the personal computer user will receive communications in form of visual displays and transmit communications by inputting respective data into the personal computer. Optionally, the telephone user can operate keys of the telephone to input communications data and can be provided visual information on a display on the telephone. Moreover, the personal computer user can input and receive acoustic data if using respective units (e.g., microphone and headset). Nevertheless, the way both users operate the respective end user unit does not necessarily depend on the end user unit of the other party. Rather, both users operate their end user units in a conventional manner. In contrast to conventional communications, different technologies are merged without specific interaction required to be performed by the users.

With respect to routing of communications links, telecommunications web site TCW permits the use of different networks in parallel and/or in series to perform communications. For example, in the case of video conferencing, telecommunications web site TCW routes any data which can be visualized on a monitor over a data link suitable for video data (e.g., a computer/Internet-based network), while voice data will be routed over a telephone network. As a result, the participating parties benefit from the technical properties of the telephone network, which is optimized with respect to a transmission voice data, and at the same time benefit from the quality of visual data transmitted via a link designed for that purpose. Further, the participating parties are not required to control transmission links for different data/content. Rather, telecommunications web site TCW automatically selects, depending on the data to be transmitted, a suitable network. Since all data routing is automatically performed inside the communications environment, there is no need to use different end user units for data being transmitted via different communications links. For example, in the case of video conferencing, the participating parties can use personal computers equipped with a video camera and visual and acoustic display devices as integral end user units. The end user units may thus may transmit and receive integral communications. Despite the integral front end appearance of the communications, different communications types may be executed using separate respective networks.

In addition to integration of different communications networks and end user units, telecommunications web site TCW permits an individual communications control for each party. For instance, in case of two parties communicating via their respective telecommunications web site, each party can determine and change the set of end user units used (e.g., switching on/off of webcams for video conferencing, switching media chat to telephone, for example, etc.) without any break in communication. In particular, a party can decide to deny access to specific end user units (e.g., no faxes when calling a new business contact). This is in contrast to known Internet-based and telephone network-based communications environments, which provide for standardized interfaces and standardized communications functionalities, both of which offer a limited range of modification possibilities for different users.

Moreover, definitions, or settings, of telecommunications web site TCW may include defining how communications are to be routed to and/or from first end user unit EUU1 and/or specific entity SE. For example, specific entity SE may define via which gateway and/or which network communications will be executed to provide, e.g., for personal computer-based communications, telephone-based communications, etc. Thus, it can be defined that particular end user units are allowed to communicate with the owner of the telecommunications web site TCW, i.e., the specific entity SE, on the basis of a computer-computer-link only, while other end user units are also allowed to communicate to/or from telephones.

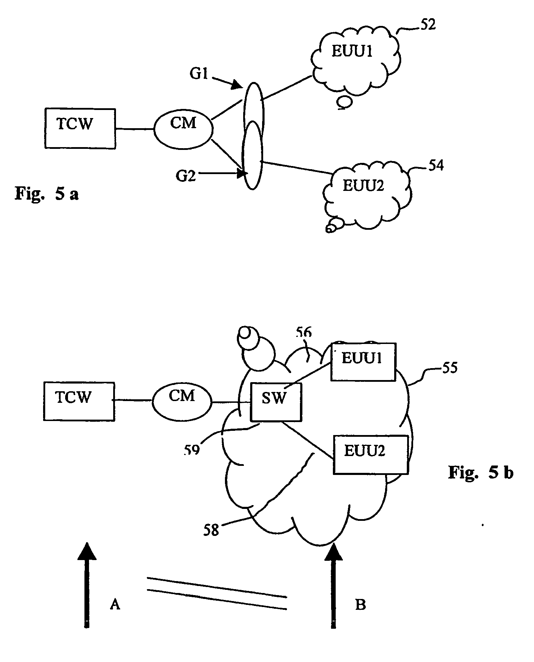

Figs. 5a and 5b depict possible configurations for connections controlled by telecommunications web site TCW. In Fig. 5a, first end user unit EUU1 in PCTN network 52 desires to connect to a user using end user unit EUU2. The user of the first end user unit EUU1 calls telecommunications web site TCW via gateway G1 and connection means CM. Telecommunications web site TCW then initiates a connection to EUU2 via connection means CM and gateway G2 into UMTS network 54 in which EUU 2 is situated. The connection is controlled by the telecommunications web site TCW through its control of connection means CM. In this case, connection means CM is an IP-switch controlling the connection established via gateway G1 to PSTN network 52 and gateway G2 into UMTS network 54. Thus, a connection between two completely different networks can be established via telecommunications web site TCW. As soon as the connection is terminated by the host of telecommunications web site TCW, connection means CM will terminate the connection between first end user unit EUU1 and EUU2. Thus, the host of telecommunications web site TCW, i.e., specific unit SE, is in control of the connection between first end user unit EUU1 and EUU2.

In Fig. 5b, a similar scenario to the that in Fig. 5a is illustrated. In this case, first end user unit EUU1 seeks connection to end user unit EUU2, both being situated in the same kind of network, here PSTN network 55. First end user unit EUU1 contacts the telecommunications web site TCW. The telecommunications web site TCW establishes connection 56 via connection means CM, controlling switch SW to establish second connection 58 to the EUU2. These two connections to first end user unit EUU1 and to EUU2 are then connected by switch SW in PSTN network 55 to form a complete connection 59 between first end user unit EUU1 and EUU2. Switch SW is thus a PSTN-switch. The telecommunications web site TCW has control over the connection between first end user unit EUU1 and EUU2. If for instance the host of the telecommunications web site TCW, that is specific entity SE, accesses the telecommunications web site TCW (indicated by arrow A) specific entity SE may at the same time use end user unit EUU2, e.g., a telephone, for talking to the first end user unit EUU1 (indicated by arrow B). Thus, specific entity SE may control connection 59 using the telecommunications web site TCW, and communicate with first end user unit EUU1 using the telephone EUU2. To terminate connection 59, the specific entity may either terminate the connection by choosing so in the telecommunications web site TCW accessed for instance by a browser. The specific entity may also terminate connection 59 by hanging up the telephone EUU2. Further, the specific entity may choose to change the kind of end user unit he or she is using, i.e., EUU2, and connect via the telecommunications web site TCW to another end user unit and continue the communication with first end user unit EUU1.

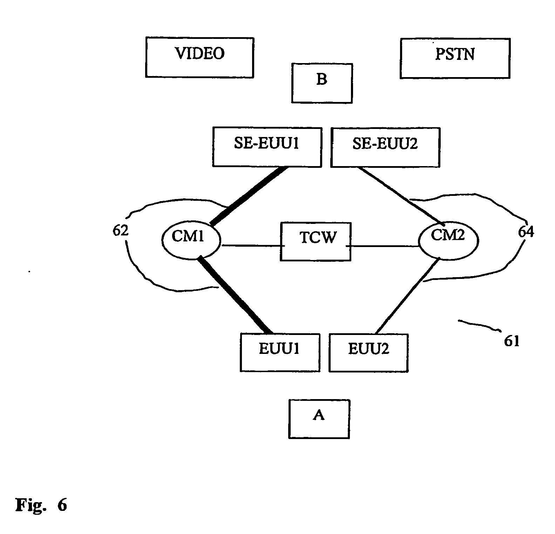

Fig. 6 shows a schematic diagram in which participant A communicates with another participant, specific entity B, via telecommunications web site TCW using two different first end user units EUU1 and EUU2 at the same time in parallel. First end user unit EUU1 connects via the telecommunications web site TCW and connection means CM1 respectively, to end user unit SE-EUU1 of specific entity B. At the same time, the participant A may connect to participant B with end user unit EUU2 via the telecommunications web site TCW and connection means CM2, respectively, to end user unit SE-EUU2 associated with specific entity B. First end user unit EUU1 and end user unit SE-EUU1 may be TCP/IP video devices and monitors connected by connection means CM1, while EUU2 and SE-EUU2 may be PSTN devices, such as telephones, connected by connection means CM2. Connection means CM2 may be a PSTN-switch. With such an arrangement, multiprotocol chain 61 may be established with two different types of communication links, or channels 62 and 64. Here, communication link 62 is a video channel 62 and communcation link 64 is a telephone channel. Participant A may be connected to specific entity B by telephone via a PSTN network. This connection, communication link 64, is controlled by the telecommunications web site TCW via connection means CM2. At the same time, the video picture is transmitted over communication link 62 via TCP/IP controlled by the telecommunications web site TCW via connection means CM1. Thus, participant A may speek to specific entity B without delays in the voice transmission via a PSTN network whereas the picture is transmitted via TCP/IP with an acceptable quality of service for video pictures. Both communication channels 62 and 64 are controlled by the same telecommunications web site TCW and may be routed according to costs, quality of service, or other parameters relevant for this kind of communication. In another embodiment, a third and/or a fourth channel may be established using additional types of communication links and end user units to communicate, for instance a fax machine, a UMTS decvice, a web page, etc.

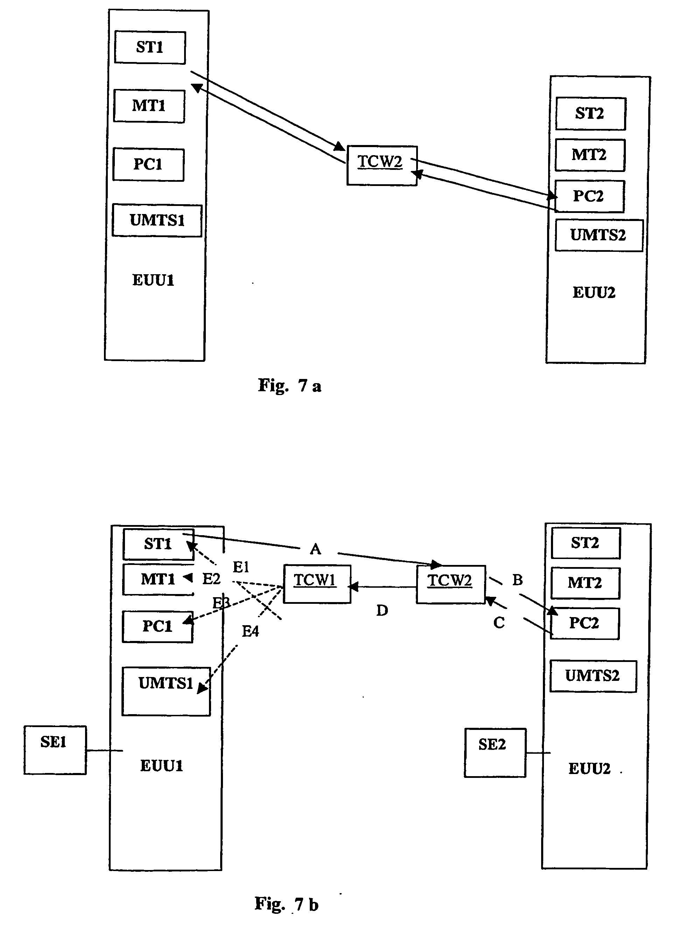

Refereing now to Figs. 7a and 7b, communication via one and two telecommunications web sites TCWs, respectively, is illustrated.

In Fig.7a, first end user unit EUU1 including any of an array of end devices, as well as end user unit EUU2 including any of an array of end devices, is illustrated. First end user unit EUU1 may be any of the following end devices: stationary telephone ST1, mobile telephone MT1, personal computer PC1 and UMTS device UMTS1. EUU2 may be any of the following end devices: stationary telephone ST2, mobile telephone MT2, personal computer PC2 and UMTS device UMTS2. A participant using first end user unit EUU1 calls telecommunications web site TCW2 with stationary telephone ST1. Telecommunications web site TCW2 recognizes a request to be connected to EUU2. Thus, after checking its stored user profiles, telecommunications web site TCW2 establishes the connection to personal computer PC2. Personal computer PC2 responds via the telecommunications web site TCW to stationary telephone ST1. In this example, the owner/host of telecommunications web site TCW2 has chosed personal computer PC2 as his preferred communications device for this specific date, time and/or accessing party. Personal computer PC2 uses a headset, soundcard and client software of telecommunications web site TCW2 to "talk" to a voice over IP gateway (not shown) of the telecommunications web site, which in turn allows the connection to the PSTN (not shown) used by stationary telephone ST1. In another embodiment telecommunications web site TCW2 could act as a speech-to-text and text-to-speech gateway, thus performing a "chat" function for the owner of the telecommunications web site and effecting a telephone call to the calling party. Such capability could be useful, for example, where the owner of telecommunications web site TCW2 is mute or deaf or unable to speak freely.

In Fig. 7b, a participant using first end user unit EUU1 uses stationary telephone ST1. In step A, stationary telephone ST1 contacts the second telecommunications web site TCW2. Second telecommunications web site TCW2 is associated with specific entity SE2, which uses second end user unit EUU2. The second telecommunications web site TCW2 recognizes a request to contact the user of EUU2 and connects in step B first end user unit EUU1 to personal computer PC2, in accordance with predetermined preferences of specific entity SE2. In response, PC2 contacts second telecommunications web site TCW2 in step C. Second telecommunications web site TCW2 now contacts first telecommunications web site TCW1 in step D. First telecommunications web site TCW1 is associated with specific entity SE1, which uses first end user unit EUU1. Since both telecommunications web sites TCWs use the same protocol, first telecommunications web site TCW1 shares with second telecommunications web site TCW2 information as to which end devices of first end user unit EUU1 are available. Thus, the connection may now be established to stationary telephone ST1 according to step E1, to mobile telephone MT1 according to step E2, to personal computer PC1 according to step E3, or to UMTS1 according to step E4. The end device availability information is available because telecommunications web site TCW1 and telecommunications web site TCW2 share information regarding their respective associated end user units with each other. Thus, using the present invention, different end user units on each side of the communication may be integrated in a communication event.

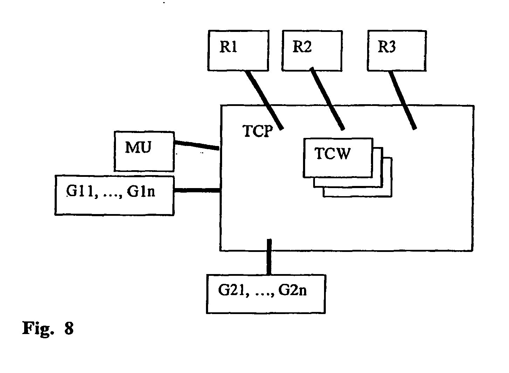

Refering now to Fig. 8, for providing telecommunications web site TCW, telecommunications portal TCP may be provided. Telecommunications web site TCW may have first end user unit EUU1 (not shown) and specific entity SE (not shown) associated with it. One or more telecommunications web sites TCW1...TCWn may be provided on telecommunications portal TCP, each telecommunications web site having a respective associated end user unit and specific entity. Telecommunications portal TCP serves as a physical location, such as one or more servers, for example, whereon telecommunications web site TCW resides. This allows for an enhanced communications rate since data/information to be communicated are not required to be transmitted between separated or remote locations. Rather, all communications are exchanged through the telecommunications web site TCW, as if passing through a window, as discussed above. Further, telecommunications portal TCP is capable of providing telecommunications web site TCW in a manner compatible to first end user unit EUU1 and specific entity SE. In addition, the telecommunications portal TCP can control the compliance with definitions of telecommunications web site TCW, e.g., on the basis of memory unit MU associated with telecommunications portal TCP and telecommunications web site TCW, respectively. The definitions of telecommunications web site TCW may include individual user settings dependent upon available end user units, the available features of telecommunications web site TCW, etc. Moreover, telecommunications portal TCP is capable of communicating with gateways G11,... , G1n and G21, ..., G2n to route communications links to first end user unit EUU1 and specific entity SE according to types and/or respective definitions for telecommunications web site TCW. Memory unit MU and gateways G11, ... , G1n and G21, ..., G2n may be referred to as resources of telecommunications portal TCP.

Further, telecommunications portal TCP may have various other different resources R1, R2 and R3 associated thereto. For example, resource R1 is a content managing system in which news contents, calendar functions, entertainment services and other content services of telecommunications portal TCP are provided. Resource R2 is a special high-speed gateway to the PSTN. Resource R3 is an optical fibre connection to three other telecommunications portals (not shown). Other types of resources may be provided. Thus, telecommunication web site TCW may use all resources R1 to R3, the memory unit MU and the gateways 1 and 2 provided by the telecommunications portal. In addition, other telecommunication web sites residing on telecommunications portal TCP may use these resources. All telecommunication web sites of telecommunications portal TCP may reside on the same server. Thus, communication between these telecommunication web sites on telecommunications portal TCP can be very fast and enhanced since the speed of communication between these web sites and the speed with which data exchange can take place may be very high. MP3 data files, picture files, text files and other data may be exchanged very quickly between the specific entities of the different on telecommunications portal TCP. As noted above, telecommunication web sites residing on telecommunications portal TCP may have an integreated consistent addressing scheme. Further, the telecommunication web sites on may communicate with a common protocol. Thus, the telecommunication web sites may automatically share certain information regarding the specific entities of these telecommunication web sites. New data entries of the specific entity in its telecommunication web site are exchanged automatically. For instance, the new address of a specific entity amended in its own telecommunication web site may be communicated to other telecommunication web sites in this telecommunications portal on accessing these web sites. Thus, communication between the telecommunication web sites of the same telecommunications portal TCP is enhanced.

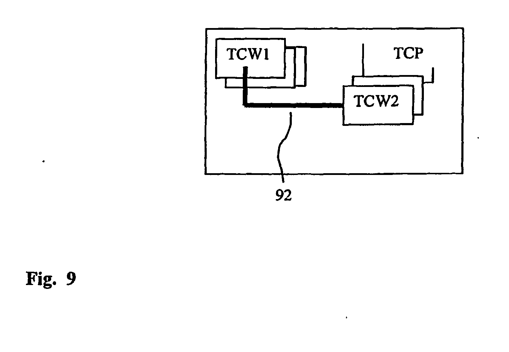

In figure 9 communication between two telecommunication web sites TCW1 and TCW2 on the same telecommunications portal TCP is depicted. On telecommunications portal TCP, first telecommunication web site TCW1 is connected to second telecommunications web site TCW2 by communication link 92. In this case, communication link 92 is an optical fibre. Thus, first telecommunications web site TCW1 may communicate with second telecommunications web site TCW2 much faster than two other telecommunication web sites not residing on the same telecommunications portal. Such non-coresident telecommunication web sites may communicate via the Internet or a PSTN network, likely at a slower data rate. Thus, first telecommunications web site TCW1 and second telecommunications web site TCW2 residing on the same telecommunications portal TCP may communicate in an enhanced fashion.

In some embodiments, the same hardware and/or software components form both TCW1 and TCW2. Thus communication between the two may be accomplished by copying data within the same system of hardware. In other embodiments, the two telecommunications web sites are formed by at least some different hardware components located in close proximity to each other, for example in a common data processing center. In such embodiments, different hardware components may be linked by fast connections, such as a fibre optic connection, as discussed above, or other types of fast connections. Very fast communications with huge bandwidth between telecommunication web sites on different hardware may thereby be provided.

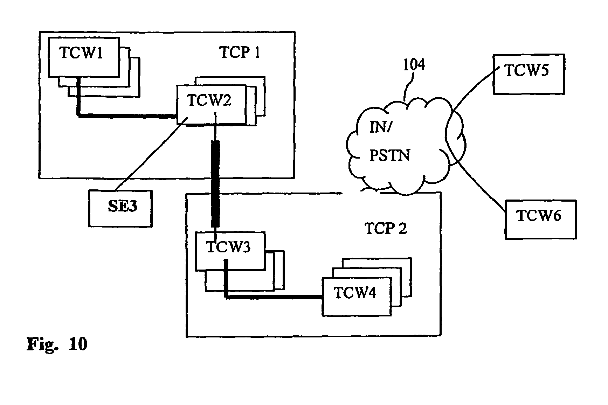

Fig.10 shows two telecommunications portals TCP1 and TCP2. Telecommunication portal TCP1 has telecommunication web sites TCW1 and TCW2 resident thereon. Telecommunication portal TCP2 has telecommunication web sites TCW3 and TCW4 resident thereon. Telecommunications portals TCP1 and TCP2 are connected by high-speed link 102. Telecommunications portal TCP1 includes connection device 111 and telecommunications portal TCP2 includes connection device 112 for establishing high speed link 102. Connection devices 111 and 112 may each be a converter, an adapter, an IP-switch, an ATM-switch, a mechanical or electro-mechanical switching board, a protocol translator, a gateway, a telephone network gateway, a UMTS/ G3 network gateway, a computer network gateway, a television network gateway, a cable network gateway, an Internet gateway; a web server/client communicating via http, or a server/client communicating via a dedicated protocol, for example. High-speed link 102 enables telecommunications portal TCP1 and telecommunications portal TCP2 to communicate in a privileged and fast way. Telecommunications portal TCP1 and telecommunications portal TCP2 may control the quality of service of high-speed link 102. High-speed link 102 may be a dedicated link or reserved bandwidth on a shared link, for example.

Telecommunications portal TCP 1 and telecommunications portal TCP2 use the same protocol chosen from a common list of protocols. This common protocol is used to exchange information regarding the telecommunication web sites residing on each of the telecommunications portal TCP1 and telecommunications portal TCP2. Thus, third telecommunications web site TCW3 knows automatically from data exchange between telecommunications portal TCP1 and telecommunications portal TCP2 necessary information regarding specific entity SE3 associated with third telecommunications web site TCW3. Third telecommunications web site TCW3 can connect to second telecommunications web site TCW2 using this information. Thus, not only communication between first telecommunications web site TCW1 and third telecommunications web site TCW3, residing on the same telecommunications portal, is priviliged. Additionally, communication between third telecommunication web site TCW3 and second telecommunications web site TCW2 is priviliged since they are both supported by the common protocols used by the telecommunications portal TCP1 and telecommunications portal TCP2. These protocols may be any of a variety of network protocols, such as https,http, ftp, smtp, or any file transfer protocol as defined for peer-to-peer file transfer (e.g. Napster, Gnutella, Freenet, OpenFT, etc.), any protocol for remote procedure calls such as CORBA, SOAP, DCE (Distributed Computing Environment) RPC of the Open Software Foundation (OSF), ONC (Open Network Computing) RPC of Sun Microsystems, or any protocol based on sending of TCP/IP or of UDP packets, or of other types of packets. Preferable are versions of these protocols which provide secure communication in the sense that the packets of data sent are encrypted and signed for security and authenticity. The communication between third telecommunications web site TCW3 and second telecommunications web site TCW2 is thus more advanced, faster and more priviliged than, for instance, communication between fifth telecommunication web site TCW5 and sixth telecommunications web site TCW6 via network 104. Network 104 may be the Internet (IN) or a PSTN network, as shown Fig. 10.

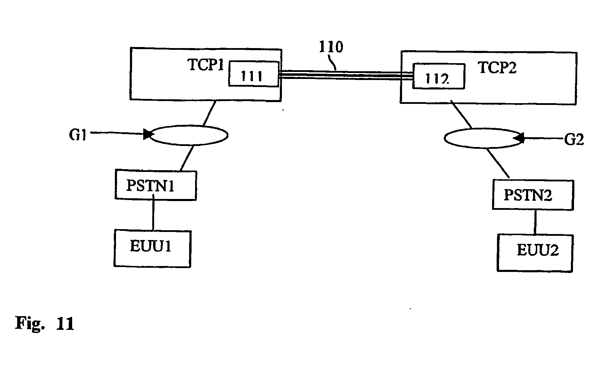

Refering now to Fig. 11, two telecommunications portals TCP1 and TCP2 are shown connected by link 110, which may be a high-speed link, such as a fiber optic link, for example. Telecommunications portals TCP1 and TCP2 each include a respective connection device 111 and 112 for interfacing with link 110. Connection devices 111 and 112 may be a converter, an adapter, an IP-switch, an ATM-switch, a mechanical or electro-mechanical switching board, a protocol translator, a gateway, a telephone network gateway, a UMTS/ G3 network gateway, a computer network gateway, a television network gateway, a cable network gateway, an Internet gateway; a web server/client communicating via http, or a server/client communicating via a dedicated protocol. Both telecommunications portals TCP1 and TCP2 communicate according to a common protocol. Link 110 allows for synchronous communication. This means that the communication may have no, or minimal, delay that would cause a human being to be irritated. Thus, a human being may be able to communicate by voice via link 110 between the telecommunication portal TcPl and telecommunications portal TCP2 because there is no delay in the data, containing the voice information, transmitted from telecommunications portal TCP1 to telecommunications portal TCP2 and vice versa. As a result, first end user unit EUU1 in PSTN network PSTN1 may access telecommunications portal TCP1 via gateway G1 and request a connection to EUU2 within PSTN network PSTN2. PSTN network PSTN2 is connected to telecommunications portal TCP2 via gateway G2. Since both telecommunications portals TCP1 and TCP2 are connected to each other with high-speed link 110, the first end user unit EUU1 may now communicate with EUU2 in PSTN-network PSTN2 in a real time manner without significant delays in the transmittal of the voice. Telecommunications portal TCP1 may be provided on a first continent and telecommunications portal TCP2 may be provided on a different continent. Therefore, two users may be advantageously connected by their access to the telecommunications portals via the gateway. First end user unit EUU1 may contact telecommunications portal TCP1 initiating a local call via gateway G1. Similarly, EUU2 may use PSTN2 to access telecommunications portal TCP2 and initiate a call via gateway G2. Thus, users of local PSTN-networks may only pay for accessing a respective local telecommunications portal. However, these users do not have to pay for the connection between telecommunications portal TCP1 and telecommunications portal TCP2, i.e., high-speed link 110. Thus, users in PSTN-networks PSTN1 and PSTN2 may be connected from continent to continent with each having to pay only for their local calls. Thus, a cost effective communication with a high quality of service may be provided.

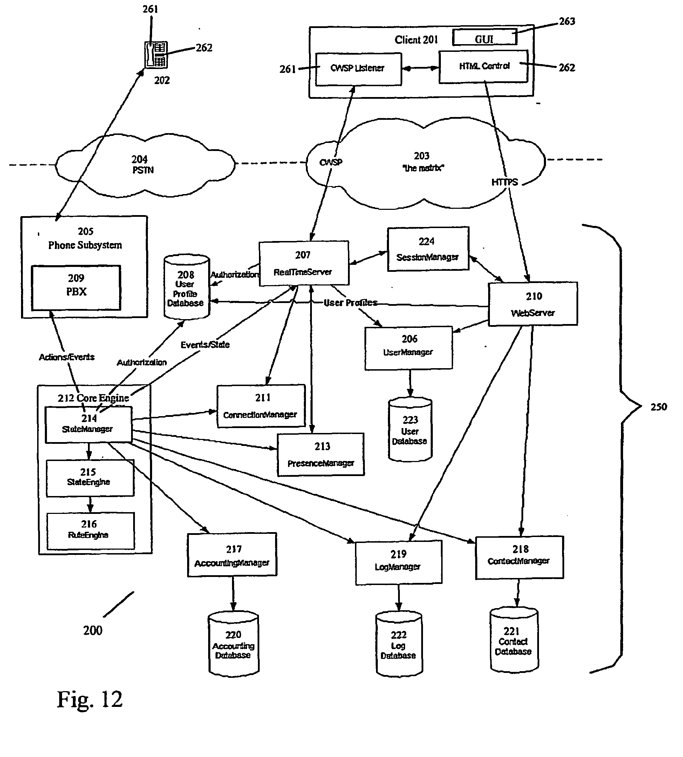

Fig. 12 shows the architecture of a communications environment 200 according to an embodiment of the present invention. Communications environment 200 includes telecommunications web site 250 and client 201, which communicate over matrix 203. Matrix 203 may be the Internet or an intranet, for example. Telephone 202 serves as an end user unit, communicating with telecommunications web site 250 over PSTN 204 to access phone subsystem 205. Telephone 202 may belong to the specific entity, i.e., the owner of telecommunications web site 250. Telephone 202 includes handset 261 which serves as an interface for user input and output, i.e., voice signals. Other telephones may serve as end user units for other called parties and/or users of telecommunications web site 250 and may likewise communicate over PSTN 204 and access phone subsystem 205. Network interface device 262 is also included in telephone 202 for interfacing with PSTN 204. In other embodiments of the present invention, other types of end user units which access telecommunications web site 250 over other types of networks or communications links may be provided.

Client 201 provides a user interface for a user accessing telecommunications web site 250. The user may be any authorized user of telecommunications web site 250, including the specific entity. Client 201 may reside on a computing device of a user, for example. More than one client 201 may be provided, each one corresponding to a given user. Client 201 includes CWSP listner module 261, HTML control module 262, and graphical user interface (GUI) 263. GUI 263 may be a browser-based graphical user interface including action buttons for clicking to perform actions. CWSP listener module 261 is a module which signals events (e.g., incoming call, new e-mail message, new fax, new visitor, etc.) to client 201. Signalling protocol CWSP is used for communication between CWSP listner module 261 and server 207 (described below) of telecommunications web site 250. Signalling protocol CWSP provides for encryption (TLS 1.0/SSL 3.0) of datagrams with asymetic handshake and symetric session encyrption, with no need for certificates from client 201. Signalling protocol CWSP may provide for signalling of the following:
- Login Handshake
- Signaling of Line States with unique LINE-Ids, including ringing and hangup
- Initiate Line Actions, including call number and route incoming call to a number
- Client State, including represent the general state of the application and signal the refresh of certain areas on the client
- Keep-Alive
- Logout
- Time-Sync
- Packet-Delay measurement to ensure fast data rate
- Presence Information of contacts (Logon/Logoff/Break/...).

HTML control module 262 controls specific areas of the user interface and loads HTML pages into any controlled area on request by CWSP listener module 261. HTML control module 262 communicates with webserver 210 (described below) of telecommunications web site 250. To ensure privacy of the communications between HTML control module 262 and webserver 210, HTML control module 262 uses the protocol Hypertext Transfer Protocol over TLS (HTTPS), which is described in E. Rescorla, Memo, Network Working Group , "HTTPS Over TLS", The Internet Society, 2000, which is hereby incorporated by reference herein.

Telecommunications web site 250 may includes a variety of components: phone subsystem 205, user manager 206, real time server 207, user profile database 208, web server 210, connection manager 211, core engine 212, presence manager 213, account manager 217, contact manager 218, log manager 219, and session manager 224. Some or all of the components of telecommunications web site 250 may be software components running on any of a variety of operating systems, such as any flavour of UNIX (BSD, Solaris, HP-UX,...), Linux, any Microsoft operating system (DOS, Windows 95,98,NT,XP,ME), and any realtime operating system (e.g. QNX, RTOS, EUROS,...), for example. Some or all of the components of telecommunications web site 250 may run on any of a variety of known or future computer hardware (e.g. Intel, AMD, HP, Sun, Motorola, IBM...). Some or all of the components of telecommunications web site 250 may be written in any of a variety of programming language, preferably any higher programming language such as C, Fortran, Basic, Pascal, Lisp, etc., or any higher object oriented programming language such as C++, Java, Python, etc., or any script language like Perl, PHP, etc., for example. Some or all of the components of telecommunications web site 250 may reside on the same hardware and may communicate via any suitable interprocess communication method provided by the operating system.

When any of the components of telecommunications web site 250 communicates with any other component not residing on the same hardware, the relevant components may use any of a variety of network comunication protocols, such as, for example, Common Object Request Broker Architecture (CORBA), Remote Procedure Calls (RPC), Simple Object Access Protocol (SOAP), RPC via SOAP, HTTP, FTP, etc. Communication between components of telecommunications web site 250 may be established via mounting of filesystems and exchange of files. Some or all of the components of telecommunications web site 250 may exist in parallel multiple times so as to provide a scalable system for many, even several million users or more. In some embodiments of the present invention, several instances of the same component may be distributed on several different hardware devices. Hardware links between different hardware devices may be any of a variety of communications links, such as Ethernet, for example, or other network types, using any of a variety of interfaces, such as serial, parallel, etc.

Database components, such as user profile database 208, contact database 210 (discussed below), accounting database 220 (discussed below), log database 222 (discussed below), and user database 223 (discussed below), may be any of a variety of relational datbases, such as ORACLE, mySQL, etc., or object oriented databases, such as 'Fast Objects' , any OQL database, XML Databases like dbXML, Tamino, X-Hive/DB, etc.

Phone subsystem 205 incorporates one or more private branch exchanges (PBX) 209. PBX 209 may include, for example, the Net@tec Phone Subsystem with NMS hardware, made by Net@tec. Phone subsystem 205, using PBX 209, may provide the following functionality:
- Signaling of incoming calls
- Signaling of Phone Events (e.g. Ringing, Hangup, Connect)
- Signaling of DTFM
- Creation of new Line Handles
- Connection of 2 or more Line Handles for conferencing
- Forwarding of incoming calls

User manager 206 receives login and password information and returns the corresponding user identification number if the combination is correct. User manager 206 communicates with user database 223 to check the login and passwork information and to locate the correct user identification number. User database 223 stores central user data, such as login, password and address information, for each user.

Real time server 207 may perform the following functions
- Sends all signals representing the current state of the system via signalling protocol CWSP to client 201.
- Uses session manager 224 to share a session with web server 210. This ensures that the right combination of information is sent from real time server 207 and web server 210 to client 201. This ensures that no other user is able to access data of any other user.
- Uses user profile database 208 to check the authorization level of a user. This is required because different users may have different contracts enabling them to use a different set of features of telecommunications web site 250.
- Uses connection manager 224 to keep track of the lines (connections between phone subsystem 205 and any telephone) and logins of a given user. At any time the connection manager will know which lines on which PBX 209 and which logons on which instances of real time server 207 belong to a given user.
- Uses presence manager 213 to keep track of the presence condition of any user.
- Signals events to core engine 212 (e.g., the "call telephone number 00497219432940 button" was pressed on client 201), and receives information about the current state of the system from the core engine.

User profile database 208 holds user profiles containing information about the contract type, the user's phones, personal settings and personal rules, invoices, permissions and the personal state graphs which describe the behavior of the system at any given time.

Web server 210 provides all information displayed on client 201 which is not beeing transported by signalling protocol CWSP.Web server 210 may provide the following functions:
- Creates a Client Home Page with the personal greeting text, which is displayed using client 201.
- Receives personal text messages from visitors of telecommunications web site 250 and organizes delivery of these messages to the owner of telecommunications web site 250, i.e., the specific entity.
- Talks to user profile database 208 to display or to set the personal settings and personal texts.
- Uses log manager 219 to create individual pages of personal log data. Log data is a record of all communication (incoming and outgoing) via telecommunications web site 250. Pages are subsets of this record (e.g. all emails, all communication to a specific contact) sorted by any criteria (date, subject, etc.)
- Uses contact manger 216 to create individual lists of contacts and to store new contacts created on client 201.

Connection manager 211 enables the ability to get a connection between logons and current ongoing calls for a given user at a given time. For the user, or specific entity, there are several ways to get into contact with telecommunications web site 250. One of these ways is using client 201 on, e.g., a personal computer. To authorize his access, the specific entity types in his username and password and is then granted access to the telecommunications web site with certain privileges. This is called "logon". The specific entity may be logged on from different systems at the same time. For an incoming telephone call to the specific entity's telecommunications web site phone number, core engine 212 can access from connection manager 211 which system with wich address(es) the specific entity is logged on. This capability is advantageous for visualizing, on client 201, the current state (log-ons, connection details, etc.) of telecommunications web site 250. Connection manager 211 may provide the following functionality:
- Holds accounts of all logons and the associated real time server(s). Depending on the size of telecommunications web site 250, more than one real time server may be provided. A logon may be associated with a particular real time server.
- Holds accounts of all ongoing calls and associated core engine(s). Depending on the size of telecommunications web site 250, more than one core engine may be provided. An ongoing call may be associated with a particular core engine.
- It provides functions to find all real time server sessions and all core engines belonging to a specific entity.

Core engine 212 is the central component of telecommunications web site 250 which controls the current states of the telecommunications web site, and includes state manager 214, state engine 215 and rule engine 216. Core engine 212 may provide the following functions:
- Uses several state managers 214 to communicate with user manager 206, real time server 207, user profile database 208, PBX 209, connection manager 211, presence manager 213, account manager 217, contact manager 218, and log manager 219.
- Uses real time server 207 to signal events and the current state of the system to client 201; and receives events from real time server 207.
- Uses user profile database 208 to authorize calls and to retrieve user profile data for, for example, call forwarding functionality, time based change of profiles, checking of permissions, etc.
- Uses phone subsystem 205 to initiate calls and conferences; and receives signals from phone subsystem 205 about incoming calls, hangups, DTFMs, etc.
- Uses connection manager 211 to store information about current calls and to determine the respective real time server 207 instance to signal the state of each current call to.
- Uses presence manager 213 to store current presence information for each user.
- Uses accounting manager 217 to write call data records for accounting.
- Uses contact manager 218 to identify calling numbers as known contacts. Depending on this identification the forwarding might be different. The specific entity can set profiles defining, for example, that a call from user A should always be forwarded to the secretary, while a call from user B should be forwarded to his mobile phone, if the call is within normal business hours. Thus, the reaction of telecommunications web site 250 can depend on the caller, etc.
- Uses log manager 219 to write personal log records of calls.

Presence manager 213 is responsible for tracking the current presence status (offline, online, reachable, in break, in conference, etc.) of users. Presence manager 213 may provide the following functionality:
- Stores current presence information as set by real time server 207 and core engine 212.
- Delivers the current presence information to real time server 207 and core engine 212.

State manageer 214 of core engine 212 serves as the communicating part of core engine 212. In an embodiment of the present invention, state manager 214 may serve as a Corba client and/or Corba server for real time server 207, user profile database 208, PBX 209, connection manager 211, presence manager 213, account manager 217, contact manager 218, and log manager 219. State manageer 214 may provide the following functionality:
- Represents the current state of the system for real time server 207, user profile database 208, PBX 209, connection manager 211, presence manager 213, account manager 217, contact manager 218, and log manager 219.
- Passes necessary information to state engine 215. For example, loads a user state graph from profile database 208 and passes the graph onto state engine 215.
- Receives information from state engine 215 and initiates the appropriate calls of functions of real time server 207, user profile database 208, connection manager 211, presence manager 213, account manager 217, contact manager 218, and log manager 219.

State engine 215 uses the user state graph from user profile database 208 to move from one state to another; and executes the defined rules and triggers the appropriate actions via state manager 214. State engine 215 may use rule engine 216 to evaluate rules defined by the user, which are relevant to the current state. This evaluation process results in the next move by state engine 215 on the user state graph.

Rule engine 216 provides evaluation of user defined rules stored in user profile database 208. These rules provide actions associated with respective conditions. The Specific entity can set profiles defining, for example, that a call from user A should always be forwarded to the secretary, while a call from user B should be forwarded to his mobile phone, if the call is within normal business hours. Thus, the reaction of telecommunications web site 250 can depend on the caller, etc.

Accounting manager 217 receives call data records from state manager 214 which were created in state engine 215. These call data records are then written into accounting database 220 for future processing.

Contact manager 218 stores user contact data in contact database 221. Contact manager 218 serves as an interface for storage and retrieval by web server 210, and retrieval by core engine 212, of contact data.

Log manager 219 handles user log data. User log data are accounts of all communication of a given user, e.g.: "3.3.2002 17:01 Call from Frank - Duration 1:23", "3.3.2002 17:15 Email to Frank - Size 69.345 Bytes". User log data is stored in log database 222. Log manager 219 may provide the following functionality:
- Receives log data from core engine 212.
- Answers requests for user log data from web server 210, returning the data in specifically filtered or sorted formats. An example of such a user log data request is a request for all calls from a special user within the last 2 months.
- Allows certain requests from web server 210 to delete specific log data.
- Allows certain requests from web server 210 to add documents to specific log data entries. Examples of such documents include a note about a given phone call, documents exchanged during a given phone call, etc.

Session manager 224 creates and stores a record of each user session. Session manager 224 may provide the following functionality:
- Upon login via real time server 207 or via web server 210, creates a session and an associated unique session token. Since messages from client 201 to real time server 207 and web server 210 need a valid session token in order to be executed, real time server 207 and web server 210 check each request for the session token and request validation from session server 207.
- Deletes a session after a defined time of inactivity.

It should be noted that telecommunications web site 250 is scaleable. Some or all of the above-described components may be duplicated several times, depending on the number of users and size of telecommunications web site 250.

The functioning of communications environment 200 will now be demonstrated by way of examples.

Example 1 Figs. 2a and 12 may be used to demonstrate initiation of a call to a desired called party, say user 1 of end user unit EUU1, by specific entity SE, the owner of telecommunications web site 250 using client 201 to prompt the web site to establish respective connections between PBX 209 and each party over the PSTN. Here, telecommunications web site TCW and connections means CM in Fig. 2a correspond to telecommunications web site 250 and phone subsystem 205, respectively, in Fig. 12. Assumed initiate state of communications environment 200 is as follows: No ongoing calls; no precall (i.e., no call from an end user unit of specific entity SE to telecommunications web site 250 where the telecommunications web site does not yet know where to forward this call to. The specific entity might decide to choose a calling destination on client 201); specific entity SE is logged on to telecommunications web site 250 with client 201. The chain of events in communications environment 200 is as follows:
1. Specific entity SE first selects the desired called party, user 1 of end user unit EUU1, and clicks on a "connect" button (not shown) of client 201.
2. Client 201 sends a connect message via using CWSP Listener 261 via the CWSP protocol to real time server 207.
3. Real time server 207 sends an "event" to core engine 212. An event is any occurrence which might change the state of telecommunications web site 250, e.g., "specific entity SE just logged on", "specific entity SE logged off", "specific entity SE clicked on Button xyz on the client", "specific entity SE wants to call #xx.xx.xx.xx", etc.
4. Core engine 212 loads state engine 215 with the appropriate state graph and sends a signal "connect to phone number x (of specific entity SE)" to PBX 209.
5. PBX 209 connects over PSTN 204 to telephone 202 belonging to specific entity SE. The telephone rings.
6. Specific entity SE answers.
7. PBX 209 signals the successful connection to core engine 212.
8. Core engine 212 sends a signal "forward this call of specific entity SE to phone number y (of the user 1 to be called)" to PBX 209.
9. PBX 209 connects over PSTN 204 to end user unit EUU1, here the telephone of user 1 (not shown). The telephone rings.
10. User 1 answers his telephone.
11. PBX 209 sends a signal "connected number x to number y" to core engine 212.
12. Core engine 212 starts an internal call timer (not shown) to keep track of the call time.
13. The telephone call is carried on.
14. One of the parties (specific entity SE or user 1) hangs up.
15. PBX 209 receives a "hang up" signal from PSTN 204 and hangs up the connection to the other party.
16. PBX 209 signals the end of the call to core engine 212.
17. Core engine 212 stops the internal call timer, writes an appropriate log entry to the log manager 219 and a call data record to accounting manager 217.
18. Core engine 212 sends a signal "hang up" to real time server 207.
19. Real time server 207 sends a signal "hang up" via protocol CWSP to client 201.

Example 2
Figs. 2b and 12 may be used to demonstrate initiation of a call user 1 of end user unit EUU1 by specific entity SE by calling in to telecommunications web site 250 using telephone 202. Again, telecommunications web site TCW and connections means CM in Fig. 2a correspond to telecommunications web site 250 and phone subsystem 205, respectively, in Fig. 12. Assumed initiate state of communications environment 200 is as follows: No ongoing calls; no precall; specific entity SE is logged on to with client 201. The chain of events in communications environment 200 is as follows:
1. Specific entity SE takes telephone 202 off hook and dials a personal assigned telephone number to telecommunications web site 250.
2. PBX 209 signals the incoming call from specific entity SE to core engine 212.
3. Core engine 212 loads state engine 212 with the appropriate state graph and waits for any signal.
4. Specific entity SE selects the desired called party, user 1 of end user unit EW1, and clicks on a "connect" button (not shown) of client 201.
5. Client 201 sends a connect message using CWSP listener 261 via protocol CWSP to real time server 207.
6. Real time server 207 sends the event to core engine 212.
7. Core engine 212 sends a signal "forward this call of specific entity SE to phone number y (of user 1) to PBX 209.
(actions now follow as in steps 9-19 of Example 1 above)

Example 3

Figs. 2c and 12 may be used to demonstrate initiation of a call by user 1 of EUU1 by calling in to telecommunications web site 250 using end user unit EUU1, a telephone of user 1 (not shown). Again, telecommunications web site TCW and connections means CM in Fig. 2a correspond to telecommunications web site 250 and phone subsystem 205, respectively, in Fig. 12. Assumed initiate state of communications environment 200 is as follows: No ongoing calls; no precall.

1. User 1 dials the personal assigned phone number on telecommunications web site 250 of specific entity SE using end user unit EUU1.
2. PBX 209 signals the incoming call to core engine 212.
3. Core engine 212 loads state engine 215 with the appropriate state graph and uses rule engine 216 to evaluate the current rules. This evaluation yields the number of the current device on which specific entity SE is currently reachable.
4. Core engine 212 send a signal to "forward this call to the phone number x (of specific entity SE)" to PBX 209.
5. PBX 209 connects end user unit EUU1 to telephone 202 of specific entity SE.
6. The preferred telephone device (telephone 202) of specific entity SE rings.
7. Specific entity SE answers telephone .
(actions now follow as in steps 11-19 of Example 1 above)

Example 4

Figs. 2d and 12 may be used to demonstrate conference calling between specific entity SE, end user unit EUU1 and end user unit EUU2 of a second end user 2, as well as toggeling by specific entity SE between end user units EUU1 and EUU2. Again, telecommunications web site TCW and connections means CM in Fig. 2a correspond to telecommunications web site 250 and phone subsystem 205, respectively, in Fig. 12. Assumed initiate state of communications environment 200 is as follows: an ongoing call between specific entity SE and end user unit EUU1 of user 1, which ongoing call may have been established as in Examples 1, 2 or 3 above.
1. User 2 dials the personal assigned phone number on telecommunications web site 250 of specific entity SE using end user unit EUU2.
2. PBX 209 signals the incoming call to core engine 212.
3. Core engine 212 sends a signal "incoming call from phone number z (of user 2)" to real time server 207.
4. Real time server 207 sends a signal "incoming call from phone number z (of user 2)" via protocol CWSP to CWSP listener of client 201.
5. Client 201 of specific entity SE indicates the incoming call.
6. Specific entity SE clicks on an appropriate button on GUI 263 of client 201 to toggle between the call with user 1 and the call with user 2.
7. Client 201 sends a signal "toggle calls" via CWSP listener using protocol CWSP to real time server 207.
8. Real time server 207 sends a signal "toggle calls" to core engine 212.
9. Core engine 212 sends a signal "put call from user 1 on hold" to PBX 209.
10. PBX 209 puts the call with user 1 on hold and signals the successful action to core engine 212.
11. Core engine 212 sends a signal "connect specific entity SE to EUU2" to PBX 209.
12. PBX 209 signals the successful connection to core engine 212.
13. Specific entity SE and user 2 talk together.
14. Specific entity SE decides to initiate a conference call with users 1 and 2. Specific entity SE clicks on an appropriate conference button on GUI 263 of client 201 for the "on hold" connection to user 1.
15. Client 201 signalises "initiate conference" via CWSP listener 261 using protocol CWSP to real time server 207.
16. Real time server 207 signalises "initiate conference" to core engine 212.
17. Core engine 212 signalises "add connection to user 1 to the ongoing call between user 2 and specific entity SE" to PBX 209.
18. PBX 209 connects user 1, user 2 and specific entity SE and signals success to core engine 212.
19. User 1, user 2 and specific entity SE talk together in a conference.
20. Core engine 212 signals the successful conference to real time server 207.
21. Real time server 207 signals the conference to CWSP listener of client 201via protocol CWSP.
22. Client 201 provides an indication of the conference on GUI 263.
23. Specific entity SE decides to finish the conference and clicks on a "hang up" button on GUI 263.
24. Client 201 signalises "hang up" to real time server 207.
25. Real time server 207 signalises "hang up" to core engine 212.
26. Core engine 212 signalises "hang up" to PBX 209.
27. PBX 209 hangs up all 3 connections.
(actions now follow as in steps 16-19 of Example 1 above)

Example 5

Figs. 7b and 12 may be used to demonstrate the interaction between telecommunications web sites when the respective owners (specific entities) of the web sites communicate with each other. Telecommunications web site TCW1 corresponds to specific entity SE1, which uses end user unit EUU1, while telecommunications web site TCW2 corresponds to specific entity SE2, which uses end user unit EUU2.

Communications over connections A and B (Fig. 7b) may be established between end user unit EUU1 and end user unit EUU2 as in Example 3 above. Additionally, because the two web sites are connected to each other, telecommunications web site TCW2 recognizes the calling party, SE1, as the owner of telecommunications web site TCW1. Web server 210 of telecommunications web site TCW2 therefore connects as a client to web server 210 of telecommunications web site TCW1 and exchange user profiles and information about available end devices of end user unit EUU1. Telecommunications web site TCW1 may then establish a second connection between an end device of end user unit EUU1 and an end device of end user unit EUU2 as in Example 3 above. This second connection may be a connection providing higher quality communications than the communications over than the connection (Fig. 7b). The connection over A and B may then be, for example, terminated.

Where gateway G1 and/or G2 is used between connection means CM and an end user unit EUU1 and/or EUU2 (see Fig. 5a), the functioning of telecommunications web site 250 is as described in the examples above except that phone subsystem 205 is replaced or supplemented by a special IP switch. This IP switch acts as terminating device for TCP/IP connections to a gateway. The IP switch can also connect two TCP/IP connections from the switch to any gateway in order to enable gateway-to-gateway communication, and can therefore establish a connection between two different types of communication networks, such as PSTN, UMTS, etc. In other embodiments of the present invention, other types of gateway devices may be used, depending on the types of connections to be interfaced.

In the preceding specification, the present invention has been described with reference to specific exemplary embodiments thereof. It will, however, be evident that various modifications and changes may be made thereto without departing from the broader spirit and scope of the invention as set forth in the claims that follow. The specification and drawings are accordingly to be regarded in an illustrative manner rather than a restrictive sense.

## Claims

1. A communications system, comprising:
a first web site including at least one web page, wherein the first web site is adapted to provide a communication interface, the first web site (TCW1) corresponding to a first specific entity (SE1), wherein the first web site (TCW1) is configured to be accessible by a second specific entity using a second end user unit (EUU2) via a first unique address corresponding to the first specific entity in order to establish a communication with the first specific entity (SE) via the web site (TCW1) and
a second web site including at least one web page, wherein the second web site is adapted to provide a communication interface, the second web site (TCW2) corresponding to the second specific entity (SE2), wherein the second web site (TCW2) is configured to be accessible by the first specific entity using a first end user unit (EUU1) via a second unique address in order to establish a communication with the second specific entity (SE) via the web site (TCW2),
**characterized in that**
the first and the second web sites are adapted to provide, upon an access by the other web site, for direct private communications between the first specific entity (SE1) and the second specific entity (SE2).

2. The communications system of claim 1 wherein
the first and the second web sites are adapted to provide, upon an access by the other web site, for data exchange between the first and the second web site TCW1, TCW2.

3. The communications system of any of claim 2 wherein the data exchange comprises data selected from the group
- personal data of the specific entity (SE)
- communication preferences of the specific entity (SE)
- background information of the specific entity (SE)
or a combination of any of the aforementioned data.

4. The communications system of any of claims 2 or 3 wherein the kind of data to be exchanged is predefined by the specific entity (SE).

5. The communications system of any of claims 2 to 4 wherein the data is exchanged automatically.

6. The communications system of any of the preceding claims wherein the system includes more than two web sites (TCW).

7. The communications system of any of the preceding claims wherein all web sites (TCW) answer to the same protocol of data exchange.

## Patentansprüche

1. Kommunikationssystem, umfassend:
eine erste Website, die mindestens eine Webseite beinhaltet, wobei die erste Website eingerichtet ist, um eine Kommunikationsschnittstelle bereitzustellen, wobei die erste Website (TCW1) einer ersten spezifischen Entität (SE1) entspricht, wobei die erste Website (TCW1) konfiguriert ist, durch eine zweite spezifische Entität zugänglich zu sein, die eine zweite Endnutzereinheit (EUU2) mittels einer ersten einzelnen Adresse verwendet, die der ersten spezifischen Entität entspricht, um eine Kommunikation mit der ersten spezifischen Entität (SE) mittels der Website (TCW1) aufzubauen und
eine zweite Website, die mindestens eine Webseite beinhaltet, wobei die zweite Website eingerichtet ist, um eine Kommunikationsschnittstelle bereitzustellen, wobei die zweite Website (TCW2) der zweiten spezifischen Entität (SE2) entspricht, wobei die zweite Website (TCW2) konfiguriert ist, um durch die erste spezifische Entität, die eine erste Endnutzereinheit (EUU1) verwendet, mittels einer zweiten einzelnen Adresse zugänglich zu sein, um eine Kommunikation mit der zweiten spezifischen Entität (SE) mittels der Website (TCW2) aufzubauen,
**dadurch gekennzeichnet, dass**
die erste und die zweite Website eingerichtet sind, um bei einem Zugriff durch die andere Website eine direkte private Kommunikation zwischen der ersten spezifischen Entität (SE1) und der zweiten spezifischen Entität (SE2) bereitzustellen.

2. Kommunikationssystem nach Anspruch 1, wobei die erste und die zweite Website eingerichtet sind, um bei einem zugreifen durch die andere Website einen Datenaustausch zwischen der ersten und der zweiten Website (TCW1, TCW2) bereitzustellen.

3. Kommunikationssystem nach Anspruch 2, wobei der Datenaustausch Daten umfasst, die aus der Gruppe gewählt sind:
- persönliche Daten der spezifischen Entität (SE)
- Kommunikationspräferenzen der spezifischen Entität SE)
- Hintergrundinformation der spezifischen Entität (SE) oder eine Kombination irgendwelcher der vorhergenannten Daten.

4. Kommunikationssystem nach einem der Ansprüche 2 oder 3, wobei die Art der Daten, die ausgetauscht werden sollen, durch die spezifische Entität (SE) vorherbestimmt ist.

5. Kommunikationssystem nach einem der Ansprüche 2 bis 4, wobei die Daten automatisch ausgetauscht werden.

6. Kommunikationssystem nach einem der vorhergehenden Ansprüche, wobei das System mehr als zwei Websites (TCW) beinhaltet.

7. Kommunikationssystem nach einem der vorhergehenden Ansprüche, wobei alle Websites (TCW) auf das gleich Protokoll eines Datenaustauschs antworten.

## Revendications

1. Système de communication, comprenant :
un premier site web qui inclut au moins une page web, dans lequel le premier site web est adapté pour constituer une interface de communication, le premier site web (TCW1) correspondant à une première entité spécifique (SE1), dans lequel le premier site web (TCW1) est configuré de manière à pouvoir être accédé par une seconde entité spécifique en utilisant une seconde unité d'utilisateur final (EUU2) via une première adresse unique qui correspond à la première entité spécifique afin d'établir une communication avec la première entité spécifique (SE) via le site web (TCW1) ; et
un second site web qui inclut au moins une page web, dans lequel le second site web est adapté pour constituer une interface de communication, le second site web (TCW2) correspondant à une seconde entité spécifique (SE2), dans lequel le second site web (TCW2) est configuré de manière à pouvoir être accédé par la première entité spécifique en utilisant une première unité d'utilisateur final (EUU1) via une seconde adresse unique afin d'établir une communication avec la seconde entité spécifique (SE) via le site web (TCW2),
**caractérisé en ce que** :
les premier et second sites web sont adaptés pour assurer, suite à un accès par l'autre site web, des communications privées directes entre la première entité spécifique (SE1) et la seconde entité spécifique (SE2).

2. Système de communication selon la revendication 1, dans lequel les premier et second sites web sont adaptés pour assurer, suite à un accès par l'autre site web, un échange de données entre les premier et second sites web (TCW1, TCW2).

3. Système de communication selon la revendication 2, dans lequel l'échange de données comprend des données qui sont sélectionnées parmi le groupe comprenant :
- des données personnelles de l'entité spécifique (SE) ;
- des préférences de communication de l'entité spécifique (SE) ;
- une information d'arrière-plan de l'entité spécifique (SE) ;
ou une combinaison de n'importe lesquelles des données mentionnées ci avant.

4. Système de communication selon l'une quelconque des revendications 2 ou 3, dans lequel le type de données à échanger est prédéfini par l'entité spécifique (SE).

5. Système de communication selon l'une quelconque des revendications 2 à 4, dans lequel les données sont échangées de manière automatique.

6. Système de communication selon l'une quelconque des revendications précédentes, dans lequel le système inclut plus de deux sites web (TCW).

7. Système de communication selon l'une quelconque des revendications précédentes, dans lequel tous les sites web (TCW) répondent au même protocole d'échange de données.
